(19) **Europäisches Patentamt**
**European Patent Office**
**Office européen des brevets**

(11) **EP 3 659 052 B1**

(12) **EUROPEAN PATENT SPECIFICATION**

(45) Date of publication and mention
of the grant of the patent:
**18.03.2026 Bulletin 2026/12**

(21) Application number: **18838443.2**

(22) Date of filing: **24.07.2018**

(51) International Patent Classification (IPC):
**G06F 17/14** (2006.01)    **G06F 17/16** (2006.01)
**G01S 7/527** (2006.01)    **G01S 7/536** (2006.01)

(52) Cooperative Patent Classification (CPC):
**G06F 17/14; G06F 17/16;** G01S 7/2883;
G01S 7/356; G01S 7/5273; G01S 7/536

(86) International application number:
**PCT/US2018/043468**

(87) International publication number:
**WO 2019/023220 (31.01.2019 Gazette 2019/05)**

(54) **SYSTEMS AND METHODS FOR INVERTING THE CHIRP Z-TRANSFORM IN O(N LOG N) TIME AND O(N) MEMORY**

SYSTEME UND VERFAHREN ZUM INVERTIEREN DER CHIRP-Z-TRANSFORMATION IN O(N LOG N)-ZEIT UND O(N)-SPEICHER

SYSTÈMES ET PROCÉDÉS D'INVERSION DE LA TRANSFORMÉE EN Z DU SIGNAL CHIRP EN TEMPS O(N LOG N) ET EN MÉMOIRE O(N)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.07.2017 US 201762536361 P**

(43) Date of publication of application:
**03.06.2020 Bulletin 2020/23**

(73) Proprietor: **Iowa State University Research Foundation, Inc.**
**Ames, IA 50010 (US)**

(72) Inventors:
• **SUKHOY, Volodymyr**
**Huxley, Iowa 50124 (US)**
• **STOYTCHEV, Alexander**
**Ames, Iowa 50014 (US)**

(74) Representative: **Cohausz & Florack**
**Patent- & Rechtsanwälte**
**Partnerschaftsgesellschaft mbB**
**Bleichstraße 14**
**40211 Düsseldorf (DE)**

(56) References cited:
EP-A1- 2 650 695    WO-A1-2014/120178
US-A- 4 076 960    US-A- 5 282 154
US-A1- 2014 122 025    US-A1- 2017 149 590

• **WEBER GUILHERME ET AL: "Sparse Inverse Chirp-Z Transform of S-Parameter Measurements for Time Domain Analysis of Transmission Line", 1 January 2017 (2017-01-01), pages 697 - 701, XP055904721, Retrieved from the Internet <URL:https://www.sbrt.org.br/ sbrt2017/anais/1570359870.pdf> [retrieved on 20220323], DOI: 10.14209/sbrt.2017.227**
• **Y. LIU ET AL.: "An Extended Inverse Chirp-Z Transform Algorithm to Process High Squint SAR Data", PROGRESS IN ELECTROMAGNETICS RESEARCH, vol. 138, January 2013 (2013-01-01), pages 555 - 569, XP055571932, Retrieved from the Internet <URL:http://www.jpier.org/PIER/pier.php? paper=13021407>**

**Description**

FIELD OF THE INVENTION

This invention generally relates to the inverse chirp z-transform and more particularly to methods and systems for computing the inverse chirp z-transform in $O(n \log n)$ time and O(n) memory.

BACKGROUND OF THE INVENTION

The Chirp Z-Transform (CZT) extends the discrete Fourier transform (DFT) by allowing the samples to be located on a logarithmic spiral contour instead of the unit circle. More specifically, the transform distributes the samples along a logarithmic spiral contour that is defined by the formula $A W^{-k}$, where $k = 0, 1, 2, ..., M$-1. The non-zero complex numbers $A$ and $W$ specify the location and the direction of the spiral contour and also the spacing of the sample points on the contour. More specifically, given an $N$-element input vector **x**, the CZT computes an $M$-element output vector **X**, where the k-th element of **X** is given by $X_k = \sum_{j=0}^{N-1} x_j (AW^{-k})^{-j}$.

An efficient algorithm that can compute the forward chirp z-transform has previously been described. That algorithm runs in $O(n \log n)$ time, where $n$ is the size of the transform. Because the number of inputs $N$ and the number of outputs $M$ can be different, in the most general case the computational complexity of the CZT algorithm is determined by $n = \max(M, N)$.

An efficient CZT algorithm can be derived using an index substitution that was originally proposed by Bluestein in "A linear filtering approach to the computation of discrete Fourier transform," IEEE Transactions on Audio and Electroacoustics, 18(4):451-455, 1970, which is incorporated in its entirety herein by reference, to express the transform using fast convolutions. Various useful optimizations have been proposed for the CZT algorithm. Nevertheless, its computational complexity remains fixed at $O(n \log n)$.

The Inverse Chirp Z-Transform (ICZT) is the inverse of the chirp z-transform (CZT). That is, the ICZT maps the outputs of the CZT back to the inputs. Because the CZT is a linear transform, it can be expressed using a matrix product of the CZT matrix and the input vector. This matrix can be inverted using a standard algorithm. In algorithmic form, however, this process may require up to $O(n^3)$ operations.

Even though there are efficient matrix inversion algorithms that run faster than $O(n^3)$, at least $n^2$ operations are necessary to access each element of an $n$-by-$n$ matrix. Thus, $O(n^2)$ is a lower bound for the computational complexity of any ICZT algorithm that works with a complete $n$-by-$n$ matrix in memory.

To be efficient, an ICZT algorithm must have the same computational complexity as the CZT algorithm, i.e., $O(n \log n)$. This requirement rules out any method that requires storing the transform matrix in memory.

Several attempts to derive an efficient ICZT algorithm have been made. In one case (described in Frickey, "Using the inverse chirp-z transform for time-domain analysis of simulated radar signals," Technical report, Idaho National Engineering Lab., Idaho Falls, ID, 1995, incorporated in its entirety herein by reference), a modified version of the forward CZT algorithm, in which the logarithmic spiral contour was traversed in the opposite direction, was described as the ICZT algorithm. However, this method does not really invert the CZT. It works only in some special cases, e.g., when A = 1 and W = $e^{-2\pi i/n}$. That is, in the cases when the CZT reduces to the DFT. In the general case, i.e., when $A, W \in \mathbb{C} \setminus \{0\}$, this method generates a transform that does not invert the CZT.

BRIEF SUMMARY OF THE INVENTION

The present invention is defined by the appended claims. Embodiments of the present disclosure describe an efficient $O(n \log n)$ method for computing the ICZT. The method uses generating vectors to represent structured matrices (e.g., diagonal, Vandermonde, Toeplitz, circulant, or skew-circulant matrices) more compactly in O(n) memory. The ICZT can be viewed as a generalization of the inverse fast Fourier transform (IFFT) off the unit circle. In other words, the complex parameters $A$ and $W$ of an ICZT describe a logarithmic spiral contour in the complex plane. Unlike IFFT, the ICZT can use contour points off the unit circle that correspond to exponentially growing or exponentially decaying frequency components. Embodiments of the present disclosure also describe a method for improving the numerical accuracy of a CZT or an ICZT for the case when $|W| < 1$, which is given in Appendix A.

To the best of their knowledge, the inventors believe that this disclosure is the first description of an efficient ICZT algorithm. In particular, a working algorithm is described as well as its derivation. Further, the accuracy of the algorithm is verified using automated test cases.

The algorithm was derived by expressing the CZT formula using structured matrix multiplication and then finding a way to invert that formula. The essence of the ICZT computation reduces to inverting a specially constructed Vandermonde matrix *W*. This problem, in turn, reduces to inverting a specially constructed Toeplitz matrix $\hat{W}$ derived from *W*.

Other aspects, objectives and advantages of the invention will become more apparent from the following detailed description when taken in conjunction with the accompanying drawings.

BRIEF DESCRIPTION OF THE DRAWINGS

The accompanying drawings incorporated in and forming a part of the specification illustrate several aspects of the present invention and, together with the description, serve to explain the principles of the invention. In the drawings:

FIGS. 1A-1B depict two examples of logarithmic spiral contours with 32 and 64 points, respectively, where the start of each contour is indicated with an unfilled circle;

FIG. 2 is a chart providing an illustration of the numerical accuracy for performing CZT followed by ICZT for contours with shapes like those shown in FIGS 1A- 1B but with different number of points, M, and for calculations that use different floating-point precisions;

FIG. 3 is a chart providing an illustration of the generating vectors and matrix shapes for different types of structured matrices;

FIGS. 4A-4B give an example that illustrates the difference between the fixed magnitude complex exponentials used by the FFT or the IFFT and the exponentially growing or exponentially decaying complex exponentials that can be used by the CZT or the ICZT, respectively;

FIGS. 5A-5D depict examples of logarithmic spiral contours whose points are located outside the unit circle, inside the unit circle, start outside the unit circle and end inside it, and start inside the unit circle and end outside it, respectively;

FIGS. 6A-6C depict examples of logarithmic spiral contours whose points are located on the unit circle that span 90 degrees, 180 degrees, and 360 degrees, respectively;

FIGS. 7A-7B depict examples of logarithmic spiral contours whose points span two 360-degree revolutions and five 360-degree revolutions, respectively.

While the invention will be described in connection with certain preferred embodiments, there is no intent to limit it to those embodiments. On the contrary, the intent is to cover all alternatives, modifications and equivalents as included within the spirit and scope of the invention as defined by the appended claims.

DETAILED DESCRIPTION OF THE INVENTION

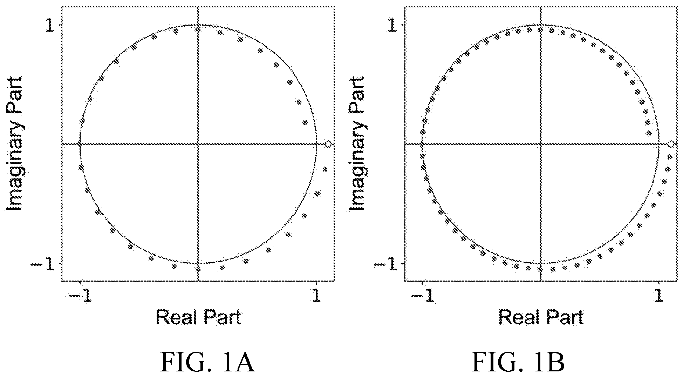

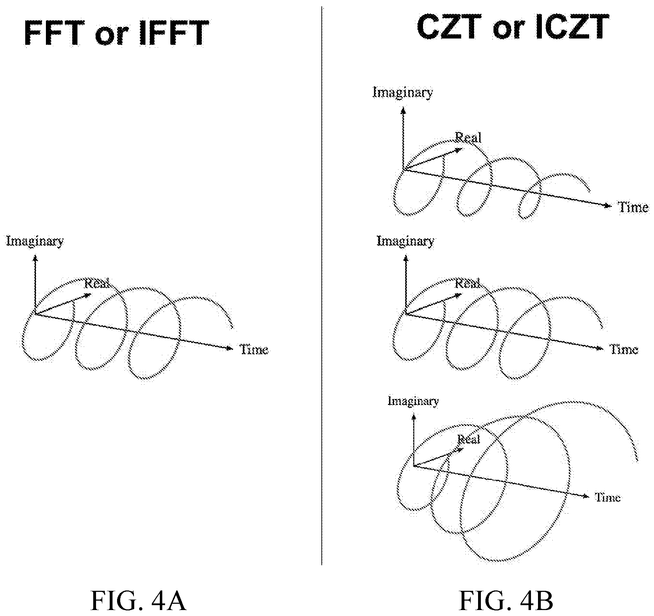

Embodiments of the present disclosure describe an efficient *O(n* log *n)* ICZT algorithm that implements the ICZT for $A, W \in \mathbb{C} \setminus \{0\}$. The ICZT generalizes the inverse fast Fourier transform (IFFT) by making it possible to distribute the sample points on a logarithmic spiral contour in the complex plane instead of the unit circle. Two example logarithmic spiral contours are shown in FIGS. 1A-1B. Whenever a sample point is not on the unit circle, the corresponding frequency component is growing or decaying exponentially. FIGS. 4A-4B show some examples of growing, decaying, and constantmagnitude frequency components used by FFT/IFFT and CZT/ICZT.

The ICZT algorithm was derived by expressing the CZT formula as a product of structured matrices and finding a way to invert the matrix equation. More specifically, computing the ICZT reduces to inverting a special case of a Vandermonde matrix *W*. This can be accomplished by inverting a special case of a Toeplitz matrix $\hat{W}$ derived from *W*

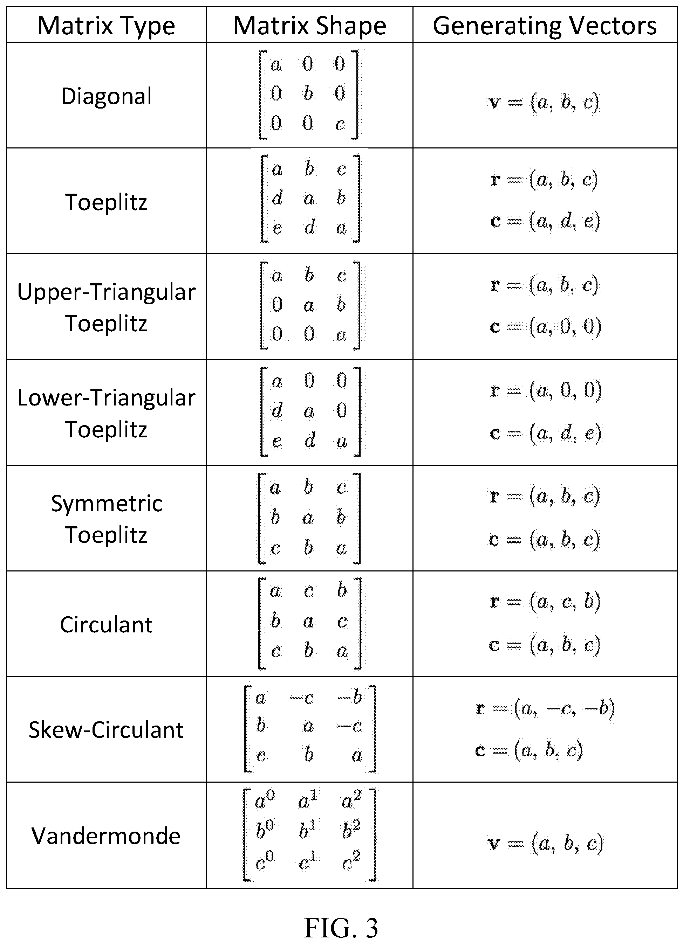

Structured matrices are matrices that can be described with fewer parameters than their total number of elements. Examples of structured matrices include Toeplitz, Hankel, Vandermonde, and Cauchy matrices. Other examples include circulant, skew-circulant, and DFT matrices. Diagonal matrices can also be viewed as structured matrices. FIG. 3 illustrates the general shape of some of these structured matrices. The examples shown in FIG. 3 are for 3-by-3 matrices. Further, FIG. 3 illustrates the generating vector(s) that can be used to generate each matrix. In most cases, these are denoted with r and c, which specify the first row and the first column of the matrix.

Gohberg and Semencul showed that the inverse of a Toeplitz matrix can be expressed using a difference of two products of Toeplitz matrices. This work can be found in I. Gohberg et al., "On the inversion of finite Toeplitz matrices and their continuous analogs," Mat. issled, 2(1):201-233, 1972 and William Trench, "An algorithm for inversion of finite Toeplitz matrices," Journal of the Society for Industrial and Applied Mathematics, 12(3):515-522, 1964, both of the references are incorporated in their entirety herein by reference. In the literature, this result is often referred to as the "Gohberg-Semencul formula." The four matrices in this formula, which are either upper-triangular or lower-triangular Toeplitz, are generated by two vectors **u** and **v.** In the case of the ICZT, the Toeplitz matrix to be inverted is also symmetric. This leads to a simplified version of the Gohberg-Semencul formula that expresses the inverse using only one generating vector, i.e., using only the vector **u.**

The inventors have determined that in the ICZT case it is possible to derive a formula that defines the generating vector **u** as a function of the complex number $W$. This formula led to an efficient ICZT algorithm. This algorithm includes a step of multiplying a Toeplitz matrix by a vector, which can be done in $O(n \log n)$, without storing the full Toeplitz matrix in memory. Appendices C, D and E implement three different algorithms based on these references that can compute this product. Each of these algorithms can be used as a building block of the ICZT algorithm. The Fast Fourier Transform (FFT) algorithm, which is stated in Appendix B, is used in each of these three algorithms.

Broader Impacts

The discrete Fourier transform (DFT) and its efficient implementation using the fast Fourier transform (FFT) are deeply embedded in a huge variety of modern-day applications. Because the CZT is a generalization of the DFT and the ICZT is a generalization of the inverse DFT, the number of potential applications of this invention is very large. So far, only the CZT algorithm had the same computational complexity as the FFT, i.e., $O(n \log n)$. This disclosure introduces an ICZT algorithm that has the same complexity as the inverse FFT (IFFT), which is also $O(n \log n)$.

In other words, this invention is transformative not only because it implements a transform that generalizes the inverse FFT, but also because the new algorithm has the same run-time complexity as the algorithm that it generalizes.

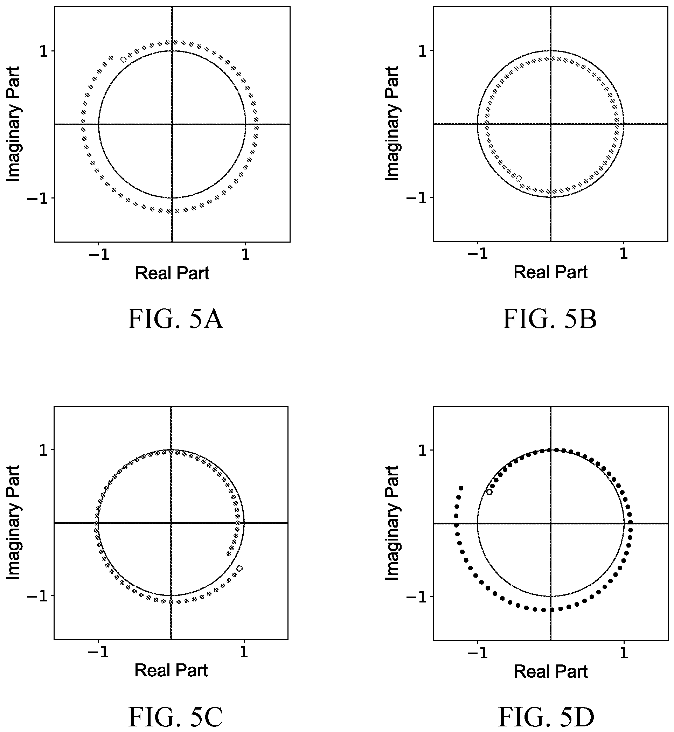

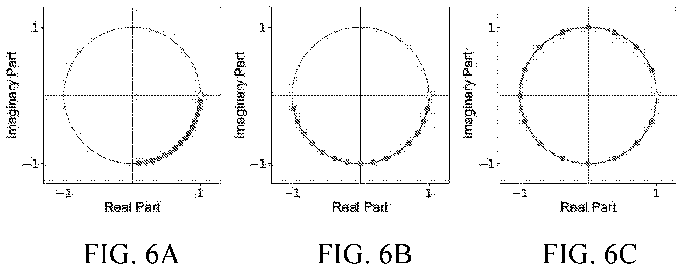

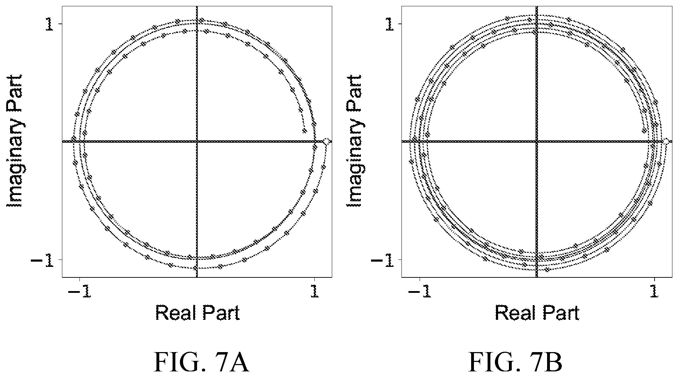

Logarithmic spiral contours that can be used with the ICZT include contours whose points are located outside the unit circle, inside the unit circle, start outside the unit circle and end inside it, start inside the unit circle and end outside it. Examples of such contours are shown in FIGS. 5A-5D. Moreover, the contour points may cover partial arcs on the unit circle, e.g., a 90-degree arc, a 180-degree arc, or even a complete 360-degree turn, in which case the contour can be identical to the contour used by the FFT/IFFT. Examples of such contours are shown in FIGS. 6A-6C. Finally, the contour points may even cover multiple 360-degree revolutions. FIGS. 7A-7B show examples with two and five complete revolutions. In general, the number of revolutions may not even be integer.

Expressing the Chirp Z-Transform Using Structured Matrices

Example 4-by-4 CZT Expressed in Matrix Form

This example describes the CZT for a special case with four inputs and four outputs using the matrix notation. In this case, the CZT is defined using the following formula:

$$X_k = \sum_{j=0}^{3} x_j \, A^{-j} \, W^{jk}, \qquad k \in \{0, 1, 2, 3\}. \qquad (2.1)$$

Let **x** $= (x_0, x_1, x_2, x_3)^{\mathsf{T}}$ denote the CZT input vector and **X** $= (X_0, X_1, X_2, X_3)^{\mathsf{T}}$ denote the output vector. Using these two vectors, the 4-by-4 CZT can also be expressed using the following matrix formula:

$$
\begin{bmatrix} X_0 \\ X_1 \\ X_2 \\ X_3 \end{bmatrix} = \begin{bmatrix} A^{-0}W^{0\cdot 0} & A^{-1}W^{1\cdot 0} & A^{-2}W^{2\cdot 0} & A^{-3}W^{3\cdot 0} \\ A^{-0}W^{0\cdot 1} & A^{-1}W^{1\cdot 1} & A^{-2}W^{2\cdot 1} & A^{-3}W^{3\cdot 1} \\ A^{-0}W^{0\cdot 2} & A^{-1}W^{1\cdot 2} & A^{-2}W^{2\cdot 2} & A^{-3}W^{3\cdot 2} \\ A^{-0}W^{0\cdot 3} & A^{-1}W^{1\cdot 3} & A^{-2}W^{2\cdot 3} & A^{-3}W^{3\cdot 3} \end{bmatrix} \begin{bmatrix} x_0 \\ x_1 \\ x_2 \\ x_3 \end{bmatrix}
$$

$$
= \underbrace{\begin{bmatrix} W^{0\cdot 0} & W^{1\cdot 0} & W^{2\cdot 0} & W^{3\cdot 0} \\ W^{0\cdot 1} & W^{1\cdot 1} & W^{2\cdot 1} & W^{3\cdot 1} \\ W^{0\cdot 2} & W^{1\cdot 2} & W^{2\cdot 2} & W^{3\cdot 2} \\ W^{0\cdot 3} & W^{1\cdot 3} & W^{2\cdot 3} & W^{3\cdot 3} \end{bmatrix}}_{W} \underbrace{\begin{bmatrix} A^{-0} & 0 & 0 & 0 \\ 0 & A^{-1} & 0 & 0 \\ 0 & 0 & A^{-2} & 0 \\ 0 & 0 & 0 & A^{-3} \end{bmatrix}}_{A} \underbrace{\begin{bmatrix} x_0 \\ x_1 \\ x_2 \\ x_3 \end{bmatrix}}_{x}
$$

$$
= W\, A\, x. \tag{2.2}
$$

That is, the example CZT can be viewed as multiplying the input vector **x** by a diagonal matrix generated by the negative powers of the complex parameter A and multiplying the resulting vector by the Vandermonde matrix **W**, which is determined by the complex parameter W.

In this example, the matrix **W** has the following form:

$$
W = \begin{bmatrix} W^{0\cdot 0} & W^{1\cdot 0} & W^{2\cdot 0} & W^{3\cdot 0} \\ W^{0\cdot 1} & W^{1\cdot 1} & W^{2\cdot 1} & W^{3\cdot 1} \\ W^{0\cdot 2} & W^{1\cdot 2} & W^{2\cdot 2} & W^{3\cdot 2} \\ W^{0\cdot 3} & W^{1\cdot 3} & W^{2\cdot 3} & W^{3\cdot 3} \end{bmatrix} = \begin{bmatrix} 1 & 1 & 1 & 1 \\ 1 & W^1 & W^2 & W^3 \\ 1 & W^2 & W^4 & W^6 \\ 1 & W^3 & W^6 & W^9 \end{bmatrix}. \tag{2.3}
$$

Inverting the matrix **W** leads to the ICZT.

Expressing the CZT Using the Vandermonde Matrix *W*

In the general case, the CZT is typically defined using the following formula:

$$
X_k = \sum_{j=0}^{N-1} x_j A^{-j} W^{jk}, \qquad k = 0, 1, \ldots, M-1. \tag{2.4}
$$

In this formula, *A* and *W* are the complex parameters for the transform that define the logarithmic spiral contour and the locations of the samples on it. The parameter *N* is an integer that specifies the size of the input vector **x**. Finally, the parameter *M* is an integer that specifies the size of the output vector **X**. In general, *N* may not be equal to *M*. That is, the dimensionality of the input may not be equal to the dimensionality of the output.

The CZT can be also expressed in matrix form:

$$
\begin{bmatrix} X_0 \\ X_1 \\ X_2 \\ \vdots \\ X_{M-1} \end{bmatrix} = \begin{bmatrix} A^{-0}W^{0\cdot 0} & A^{-1}W^{1\cdot 0} & A^{-2}W^{2\cdot 0} & \ldots & A^{-(N-1)}W^{(N-1)\cdot 0} \\ A^{-0}W^{0\cdot 1} & A^{-1}W^{1\cdot 1} & A^{-2}W^{2\cdot 1} & \ldots & A^{-(N-1)}W^{(N-1)\cdot 1} \\ A^{-0}W^{0\cdot 2} & A^{-1}W^{1\cdot 2} & A^{-2}W^{2\cdot 2} & \ldots & A^{-(N-1)}W^{(N-1)\cdot 2} \\ \vdots & \vdots & \vdots & \ddots & \vdots \\ A^{-0}W^{0\cdot(M-1)} & A^{-1}W^{1\cdot(M-1)} & A^{-2}W^{2\cdot(M-1)} & \ldots & A^{-(N-1)}W^{(N-1)(M-1)} \end{bmatrix} \begin{bmatrix} x_0 \\ x_1 \\ x_2 \\ \vdots \\ x_{N-1} \end{bmatrix}. \tag{2.5}
$$

Formula (2.5) can be restated in the following shortened form:

$$
X = W\, \mathrm{diag}(A^{-0}, A^{-1}, A^{-2}, \ldots, A^{-(N-1)})\, x, \tag{2.6}
$$

where *W* is the following *M*-by-*N* matrix:

5

$$W = \begin{bmatrix} W^{0 \cdot 0} & W^{1 \cdot 0} & W^{2 \cdot 0} & \cdots & W^{(N-1) \cdot 0} \\ W^{0 \cdot 1} & W^{1 \cdot 1} & W^{2 \cdot 1} & \cdots & W^{(N-1) \cdot 1} \\ W^{0 \cdot 2} & W^{1 \cdot 2} & W^{2 \cdot 2} & \cdots & W^{(N-1) \cdot 2} \\ \vdots & \vdots & \vdots & \ddots & \vdots \\ W^{0 \cdot (M-1)} & W^{1 \cdot (M-1)} & W^{2 \cdot (M-1)} & \cdots & W^{(N-1) \cdot (M-1)} \end{bmatrix}. \qquad (2.7)$$

$$\underbrace{\phantom{XXXXXXXXXXXXXXXXXXXXXXXXXXXXXX}}_{\text{Vandermonde matrix}}$$

It can be seen that $W$ is a Vandermonde matrix. That is, each row of $W$ forms a geometric progression. Moreover, the common ratio of each of these progressions is equal to the corresponding integer power of the parameter $W$.

The negative integer powers of $A$ in formula (2.6) scale the columns of the Vandermonde matrix $W$. Because the matrix $W$ is a special case of a Vandermonde matrix, it can be expressed as a product of diagonal matrices and a Toeplitz matrix $\hat{W}$ as described below.

Deriving the Toeplitz Matrix $\hat{W}$ from the Vandermonde Matrix $W$

Because the matrix $W$ is a special case of a Vandermonde matrix, it can be expressed as a product of two diagonal matrices and a Toeplitz matrix $\hat{W}$. It is possible to express the power of the parameter $W$ in each element of the matrix $W$ using the following equation:

$$jk = \frac{j^2 + k^2 - (k-j)^2}{2}. \qquad (2.8)$$

Equation (2.8) implies that the right-hand side of (2.4) can be expressed as follows:

$$\begin{aligned} X_k &= \sum_{j=0}^{N-1} x_j A^{-j} W^{jk} \\ &= \sum_{j=0}^{N-1} x_j A^{-j} W^{\frac{j^2 + k^2 - (k-j)^2}{2}} \\ &= \sum_{j=0}^{N-1} x_j A^{-j} W^{\frac{j^2}{2}} W^{\frac{k^2}{2}} W^{-\frac{(k-j)^2}{2}}. \end{aligned} \qquad (2.9)$$

The terms in the last formula can be rearranged so that it can be mapped to matrix products more easily:

$$X_k = W^{\frac{k^2}{2}} \left( \sum_{j=0}^{N-1} W^{-\frac{(k-j)^2}{2}} \left( W^{\frac{j^2}{2}} A^{-j} \right) x_j \right). \qquad (2.10)$$

The term $W^{\frac{k^2}{2}}$ maps to an $M$-by-$M$ diagonal matrix P. The term $W^{\frac{j^2}{2}} A^{-j}$ maps to the product of two $N$-by-$N$ diagonal matrices $Q$ and $A$. Finally, the term $W^{-\frac{(k-j)^2}{2}}$ maps to an $M$-by-$N$ Toeplitz matrix $\hat{W}$, which is shown below:

$$\hat{W} = \begin{bmatrix} W^{-\frac{(0-0)^2}{2}} & W^{-\frac{(0-1)^2}{2}} & W^{-\frac{(0-2)^2}{2}} & \cdots & W^{-\frac{(0-(N-1))^2}{2}} \\ W^{-\frac{(1-0)^2}{2}} & W^{-\frac{(1-1)^2}{2}} & W^{-\frac{(1-2)^2}{2}} & \cdots & W^{-\frac{(1-(N-1))^2}{2}} \\ W^{-\frac{(2-0)^2}{2}} & W^{-\frac{(2-1)^2}{2}} & W^{-\frac{(2-2)^2}{2}} & \cdots & W^{-\frac{(2-(N-1))^2}{2}} \\ \vdots & \vdots & \vdots & \ddots & \vdots \\ W^{-\frac{((M-1)-0)^2}{2}} & W^{-\frac{((M-1)-1)^2}{2}} & W^{-\frac{((M-1)-2)^2}{2}} & \cdots & W^{-\frac{((M-1)-(N-1))^2}{2}} \end{bmatrix}. \quad (2.11)$$

$$\underbrace{\phantom{xxxxxxxxxxxxxxxxxxxxxxxxxxxxxxxxxxxxxxxxxxxxxxxxxxxxxxxxxxxxxxxxx}}_{\text{Toeplitz matrix}}$$

This implies that a product of the matrix $\hat{W}$ and a vector can be efficiently computed using one of several $O(n \log n)$ algorithms that implement this operation (*see* Appendices C, D, and E). In other words, Equation (2.10) has the following matrix form:

$$\mathbf{X} = \mathrm{diag}\left(W^{\frac{0^2}{2}}, W^{\frac{1^2}{2}}, \ldots, W^{\frac{(M-1)^2}{2}}\right) \hat{W} \ \mathrm{diag}\left(W^{\frac{0^2}{2}}A^{-0}, W^{\frac{1^2}{2}}A^{-1}, \ldots, W^{\frac{(N-1)^2}{2}}A^{-(N-1)}\right) \mathbf{x}, \quad (2.12)$$

in which all matrix-vector products can be computed in $O(n \log n)$, where n = max(M, N).

To summarize, the CZT algorithm can be viewed as an efficient implementation of the following matrix equation:

$$\mathbf{X} = \boldsymbol{W} \mathbf{A} \mathbf{x} = \mathbf{P} \hat{\boldsymbol{W}} \mathbf{Q} \mathbf{A} \mathbf{x}, \quad (2.13)$$

where $\mathbf{P} = \mathrm{diag}\left(W^{\frac{0^2}{2}}, W^{\frac{1^2}{2}}, \ldots, W^{\frac{(M-1)^2}{2}}\right)$, $\mathbf{Q} = \mathrm{diag}\left(W^{\frac{0^2}{2}}, W^{\frac{1^2}{2}}, \ldots, W^{\frac{(N-1)^2}{2}}\right)$, A = diag ($A^{-0}$, $A^{-1}$,...,$A^{-(N-1)}$), $\boldsymbol{W}$ is a special case of a Vandermonde matrix defined in (2.7), and $\hat{\boldsymbol{W}}$ is a special case of a Toeplitz matrix defined in (2.11). As described previously, **x** is the input vector to the CZT and **X** is the output vector from the CZT.

Expressing the Inverse of a Toeplitz Matrix

The Gohberg-Semencul Formula for the 4-by-4 Case
Let T be a 4-by-4 Toeplitz matrix. That is,

$$\mathbf{T} = \begin{bmatrix} a & b & c & d \\ f & a & b & c \\ g & f & a & b \\ h & g & f & a \end{bmatrix}, \quad (3.1)$$

where *a, b, c, d, f,* g, and *h* are the seven complex numbers that generate the matrix **T**.
The Gohberg-Semencul formula states that a non-singular 4-by-4 Toeplitz matrix T can be inverted using the following equation:

$$u_0 \mathbf{T}^{-1} = \underbrace{\begin{bmatrix} u_0 & 0 & 0 & 0 \\ u_1 & u_0 & 0 & 0 \\ u_2 & u_1 & u_0 & 0 \\ u_3 & u_2 & u_1 & u_0 \end{bmatrix}}_{\mathcal{A}} \underbrace{\begin{bmatrix} v_3 & v_2 & v_1 & v_0 \\ 0 & v_3 & v_2 & v_1 \\ 0 & 0 & v_3 & v_2 \\ 0 & 0 & 0 & v_3 \end{bmatrix}}_{\mathcal{C}} - \underbrace{\begin{bmatrix} 0 & 0 & 0 & 0 \\ v_0 & 0 & 0 & 0 \\ v_1 & v_0 & 0 & 0 \\ v_2 & v_1 & v_0 & 0 \end{bmatrix}}_{\mathcal{B}} \underbrace{\begin{bmatrix} 0 & u_3 & u_2 & u_1 \\ 0 & 0 & u_3 & u_2 \\ 0 & 0 & 0 & u_3 \\ 0 & 0 & 0 & 0 \end{bmatrix}}_{\mathcal{D}}, \quad (3.2)$$

where **u** = ($u_0$, $u_1$, $u_2$, $u_3$) is a four-element vector such that $u_0 \neq 0$ and **v** = ($v_0$, $v_1$, $v_2$, $v_3$) is another four-element vector such that $v_3 \neq 0$. These two vectors are determined by the numbers *a, b, c, d, f,* g, and *h* that generate the matrix **T**. However, expressing them explicitly as functions of the seven numbers that generate **T** can be difficult.
To summarize, formula (3.2) expresses the inverse of a 4-by-4 Toeplitz matrix **T** using four structured matrices: 1) a lower-triangular Toeplitz matrix $\mathcal{A}$ generated by the vector **u**, 2) an upper-triangular Toeplitz matrix $\mathcal{C}$ generated by the reverse of the vector **v**, 3) a lower-triangular Toeplitz matrix $\mathcal{B}$ generated by the vector $(0, v_0, v_1, v_2)$, which is obtained by shifting **v** to the right by one element, and 4) an upper-triangular Toeplitz matrix $\mathcal{D}$ generated by the vector $(0, u_3, u_2, u_1)$, which is obtained by shifting the reverse of **u** to the right by one element.

The General Case of the Gohberg-Semencul Formula

Let **T** be a $n$-by-$n$ Toeplitz matrix generated by the vector $\mathbf{r} = (r_0, r_1, r_2, \ldots, r_{n-1})$ that specifies its first row and by the vector $\mathbf{c} = (c_0, c_1, c_2, \ldots, c_{n-1})$ that specifies its first column. It is assumed that $r_0 = c_0$. More formally,

$$\mathbf{T} = \begin{bmatrix} r_0 & r_1 & r_2 & \cdots & r_{n-2} & r_{n-1} \\ c_1 & r_0 & r_1 & \cdots & r_{n-3} & r_{n-2} \\ c_2 & c_1 & r_0 & \cdots & r_{n-4} & r_{n-3} \\ \vdots & \vdots & \vdots & \ddots & \vdots & \vdots \\ c_{n-2} & c_{n-3} & c_{n-4} & \cdots & r_0 & r_1 \\ c_{n-1} & c_{n-2} & c_{n-3} & \cdots & c_1 & r_0 \end{bmatrix}. \tag{3.3}$$

The inverse matrix $T^{-1}$ of a Toeplitz matrix T may not be Toeplitz. Nevertheless, the Gohberg-Semencul formula makes it possible to express $T^{-1}$ using upper-triangular and lower-triangular Toeplitz matrices.

That is, the Gohberg-Semencul formula states that there exist a vector $\mathbf{u} = (u_0, u_1, u_2, \ldots, u_{n-1})$ and a vector $\mathbf{v} = (v_0, v_1, v_2, \ldots, v_{n-1})$ that satisfy the following matrix equation:

$$u_0 \mathbf{T}^{-1} = \underbrace{\begin{bmatrix} u_0 & 0 & 0 & \cdots & 0 & 0 \\ u_1 & u_0 & 0 & \cdots & 0 & 0 \\ u_2 & u_1 & u_0 & \cdots & 0 & 0 \\ \vdots & \vdots & \vdots & \ddots & \vdots & \vdots \\ u_{n-2} & u_{n-3} & u_{n-4} & \cdots & u_0 & 0 \\ u_{n-1} & u_{n-2} & u_{n-3} & \cdots & u_1 & u_0 \end{bmatrix}}_{\mathcal{A}} \underbrace{\begin{bmatrix} v_{n-1} & v_{n-2} & v_{n-3} & \cdots & v_1 & v_0 \\ 0 & v_{n-1} & v_{n-2} & \cdots & v_2 & v_1 \\ 0 & 0 & v_{n-1} & \cdots & v_3 & v_2 \\ \vdots & \vdots & \vdots & \ddots & \vdots & \vdots \\ 0 & 0 & 0 & \cdots & v_{n-1} & v_{n-2} \\ 0 & 0 & 0 & \cdots & 0 & v_{n-1} \end{bmatrix}}_{\mathcal{C}}$$

$$- \underbrace{\begin{bmatrix} 0 & 0 & 0 & \cdots & 0 & 0 \\ v_0 & 0 & 0 & \cdots & 0 & 0 \\ v_1 & v_0 & 0 & \cdots & 0 & 0 \\ \vdots & \vdots & \vdots & \ddots & \vdots & \vdots \\ v_{n-3} & v_{n-4} & v_{n-5} & \cdots & 0 & 0 \\ v_{n-2} & v_{n-3} & v_{n-4} & \cdots & v_0 & 0 \end{bmatrix}}_{\mathcal{B}} \underbrace{\begin{bmatrix} 0 & u_{n-1} & u_{n-2} & \cdots & u_2 & u_1 \\ 0 & 0 & u_{n-1} & \cdots & u_3 & u_2 \\ 0 & 0 & 0 & \cdots & u_4 & u_3 \\ \vdots & \vdots & \vdots & \ddots & \vdots & \vdots \\ 0 & 0 & 0 & \cdots & 0 & u_{n-1} \\ 0 & 0 & 0 & \cdots & 0 & 0 \end{bmatrix}}_{\mathcal{D}}$$

$$= \mathcal{A}\mathcal{C} - \mathcal{B}\mathcal{D}. \tag{3.4}$$

In other words, the inverse matrix $T^{-1}$ can be viewed as a structured matrix that is generated by the vector u and the vector v. This analogy extends to multiplying $T^{-1}$ by a vector. If the generating vectors u and v are determined, then the product of the matrix $T^{-1}$ and a vector can be computed in $O(n \log n)$ by implementing (3.4) using structured matrix multiplication.

Expressing the ICZT Using Structured Matrices

Equation (2.13) showed that the CZT can be reduced to a sequence of matrix-vector multiplications where all matrices are diagonal except for $\hat{W}$, which is the following Toeplitz matrix:

$$\hat{W} = \begin{bmatrix} W^{-\frac{(0-0)^2}{2}} & W^{-\frac{(0-1)^2}{2}} & W^{-\frac{(0-2)^2}{2}} & \cdots & W^{-\frac{(0-(N-1))^2}{2}} \\ W^{-\frac{(1-0)^2}{2}} & W^{-\frac{(1-1)^2}{2}} & W^{-\frac{(1-2)^2}{2}} & \cdots & W^{-\frac{(1-(N-1))^2}{2}} \\ W^{-\frac{(2-0)^2}{2}} & W^{-\frac{(2-1)^2}{2}} & W^{-\frac{(2-2)^2}{2}} & \cdots & W^{-\frac{(2-(N-1))^2}{2}} \\ \vdots & \vdots & \vdots & \ddots & \vdots \\ W^{-\frac{((M-1)-0)^2}{2}} & W^{-\frac{((M-1)-1)^2}{2}} & W^{-\frac{((M-1)-2)^2}{2}} & \cdots & W^{-\frac{((M-1)-(N-1))^2}{2}} \end{bmatrix}. \tag{4.1}$$

This implies that the ICZT can be viewed as a product of diagonal matrices, the inverse matrix $\hat{W}^{-1}$, and a vector (see formula (2.13)).

Let u and **v** be the two vectors that generate $\hat{W}^{-1}$ using the Gohberg-Semencul formula, i.e.,

$$\mathbf{u} = (u_0, u_1, u_2, \ldots, u_{n-1})^T, \tag{4.2}$$

$$\mathbf{v} = (v_0, v_1, v_2, \ldots, v_{n-1})^T. \tag{4.3}$$

Because the matrix $\hat{W}$ is symmetric, its inverse $\hat{W}^{-1}$ is also symmetric. The formula for $\hat{W}^{-1}$ is a special case of the Gohberg-Semencul formula. Inspection of the special cases of the inverse matrix $\hat{W}^{-1}$ for the first several values of $n$ suggested making three useful assumptions. First, the vector **u** is equal to the first column of $\hat{W}^{-1}$. More formally,

$$u_{j-1} = \left(\hat{W}^{-1}\right)_{j,1} \qquad \text{for each } j \in \{1, 2, \ldots, n\}. \tag{4.4}$$

Second, the vector v is equal to the last column of $W^{-1}$, i.e.,

$$v_{j-1} = \left(\hat{W}^{-1}\right)_{j,n} \qquad \text{for each } j \in \{1, 2, \ldots, n\}. \tag{4.5}$$

Third, the vector **v** is equal to the reverse of the vector **u,**

$$v_k = u_{n-1-k} \qquad \text{for each } k \in \{0, 1, 2, \ldots, n-1\}. \tag{4.6}$$

In other words, only the vector **u** needs to be determined to be able to multiply the inverse matrix $\hat{W}^{-1}$ by a vector using structured matrix multiplication.

One approach to deriving an explicit formula for computing the vector **u** is to derive it from special cases for the first several values of $n$. If this induction is successful, then it should be possible to use the resulting formula for each finite $n$. Because **u** determines **v,** this is sufficient to formulate the ICZT algorithm using the Gohberg-Semencul formula and structured matrix multiplication.

Special Cases of the Formula for Inverting the Toeplitz Matrix $\hat{W}$

Special Case for $n = 1$

Suppose that $n = 1$. Then, $W$ is a 1-by-1 matrix that consists of a single number, which is equal to 1. More formally,

$$\hat{W} = \left[ W^{-\frac{(0-0)^2}{2}} \right] = [1]. \tag{4.7}$$

This implies that the inverse matrix $\hat{W}^{-1}$ is also a 1-by-1 matrix that consists of a single number 1, i.e.,

$$\hat{W}^{-1} = [1]. \tag{4.8}$$

The first and last row of $\hat{W}^{-1}$ are identical: both consist of a single element that is equal to 1. More formally,

$$\mathbf{u} = (u_0) = \left(\hat{W}^{-1}_{1,1}\right) = (1), \tag{4.9}$$

$$\mathbf{v} = (v_0) = \left(\hat{W}_{1,n}^{-1}\right) = (1). \qquad (4.10)$$

This leads to a degenerate special case of the Gohberg-Semencul formula:

$$\underbrace{u_0}_{1} \underbrace{\hat{W}^{-1}}_{[1]} = \mathcal{A}\mathcal{C} - \mathcal{B}\mathcal{D} = \underbrace{[u_0]}_{[1]} \underbrace{[v_0]}_{[1]} - [0][0] = [1]. \qquad (4.11)$$

Special Case for $n = 2$

Suppose that $n = 2$. Then, $W$ is a 2-by-2 matrix that is specified by the following formula:

$$\hat{W} = \begin{bmatrix} W^{-\frac{(0-0)^2}{2}} & W^{-\frac{(0-1)^2}{2}} \\ W^{-\frac{(1-0)^2}{2}} & W^{-\frac{(1-1)^2}{2}} \end{bmatrix} = \begin{bmatrix} W^0 & W^{-\frac{1}{2}} \\ W^{-\frac{1}{2}} & W^0 \end{bmatrix} = \begin{bmatrix} 1 & W^{-\frac{1}{2}} \\ W^{-\frac{1}{2}} & 1 \end{bmatrix}, \qquad (4.12)$$

which is well-defined for each $W \in \mathbb{C} \setminus \{0\}$.

In this case, the inverse matrix $\hat{W}^{-1}$ is also a 2-by-2 matrix, which implies that its first column $\mathbf{u}$ is a two-element vector, i.e., $\mathbf{u} = (u_0, u_1)^T$. Its elements can be expressed as a function of $W$ by solving the following linear system:

$$\hat{W}\mathbf{u} = \mathbf{e}_0. \qquad (4.13)$$

In this formula, $e_0$ denotes a vector in which the first element is set to one and the remaining elements are set to zero, i.e.,

$$\mathbf{e}_0 = (1, 0)^T. \qquad (4.14)$$

In other words, the dot-product of the first row of $\hat{W}$ and the vector $\mathbf{u}$ has to be equal to 1 and the dot product of the second row of $\hat{W}$ and $\mathbf{u}$ has to be equal to 0.

The linear system (4.13) can be expressed in terms of the four elements of $\hat{W}$ and the two elements **of u.** This leads to the following expanded form of (4.13):

$$\underbrace{\begin{bmatrix} 1 & W^{-\frac{1}{2}} \\ W^{-\frac{1}{2}} & 1 \end{bmatrix}}_{\hat{W}} \underbrace{\begin{bmatrix} u_0 \\ u_1 \end{bmatrix}}_{\mathbf{u}} = \underbrace{\begin{bmatrix} 1 \\ 0 \end{bmatrix}}_{\mathbf{e}_0}. \qquad (4.15)$$

The previous equation can also be viewed as a system of two scalar linear equations:

$$u_0 + u_1 W^{-\frac{1}{2}} = 1, \qquad (4.16)$$

$$u_0 W^{-\frac{1}{2}} + u_1 = 0. \qquad (4.17)$$

Both of these equations are well-defined whenever $W \neq 0$.

The term $u_0 W^{-\frac{1}{2}}$ can be subtracted from both sides of (4.17), which leads to a formula for the value of $u_1$ as a function of $\hat{W}$ and $u_0$:

$$u_1 = -u_0 W^{-\frac{1}{2}}. \qquad (4.18)$$

The right-hand side of the previous equation can be plugged into (4.16). This results in an equation that depends only on $u_0$ and $W$. More formally,

$$
\begin{aligned}
u_0 + u_1 W^{-\frac{1}{2}} &= u_0 - u_0 W^{-\frac{1}{2}} W^{-\frac{1}{2}} \\
&= u_0 - u_0 W^{-1} \\
&= \frac{(W-1)u_0}{W} = 1.
\end{aligned}
\qquad (4.19)
$$

Multiplying both sides of the previous equation by $\frac{W}{W-1}$ leads to a formula for the value of $u_0$ as a function of $W$:

$$
u_0 = \frac{W}{W-1}. \qquad (4.20)
$$

Plugging this value into the right-hand side of (4.18) results in a formula that expresses the value of $u_1$ as a function of $W$. More formally,

$$
u_1 = -u_0 W^{-\frac{1}{2}} = -\frac{W W^{-\frac{1}{2}}}{W-1} = -\frac{W^{\frac{1}{2}}}{W-1}. \qquad (4.21)
$$

To summarize, in the 2-by-2 case a column vector u that specifies the first column of the inverse matrix $\hat{W}^{-1}$ can be expressed as the following function of the parameter W:

$$
\mathbf{u} = \left[ \frac{W}{W-1}, \ -\frac{W^{\frac{1}{2}}}{W-1} \right]^T. \qquad (4.22)
$$

The vector $\mathbf{v}$ can be obtained by reversing the elements of $\mathbf{u}$, i.e.,

$$
\mathbf{v} = \left[ -\frac{W^{\frac{1}{2}}}{W-1}, \ \frac{W}{W-1} \right]^T. \qquad (4.23)
$$

A closed-form expression for the inverse matrix $\hat{W}^{-1}$ can be derived by combining the expressions for $\mathbf{u}$ and $\mathbf{v}$. That is,

$$
\hat{W}^{-1} = \begin{bmatrix} \dfrac{W}{W-1} & -\dfrac{W^{\frac{1}{2}}}{W-1} \\[2mm] -\dfrac{W^{\frac{1}{2}}}{W-1} & \dfrac{W}{W-1} \end{bmatrix}, \qquad W \notin \{0,1\}. \qquad (4.24)
$$

In this special case, the Gohberg-Semencul formula can be verified using the following sequence of matrix transformations. It starts from the difference between the left-hand side and the right-hand side of the formula stated in (3.4) and shows that this difference is equal to zero:

$$d = u_0 \hat{W}^{-1} - \left( \begin{bmatrix} u_0 & 0 \\ u_1 & u_0 \end{bmatrix} \begin{bmatrix} v_1 & v_0 \\ 0 & v_1 \end{bmatrix} - \begin{bmatrix} 0 & 0 \\ v_0 & 0 \end{bmatrix} \begin{bmatrix} 0 & u_1 \\ 0 & 0 \end{bmatrix} \right)$$

$$= \frac{W}{W-1} \begin{bmatrix} \dfrac{W}{W-1} & -\dfrac{W^{\frac{1}{2}}}{W-1} \\ \dfrac{W^{\frac{1}{2}}}{W-1} & \dfrac{W}{W-1} \end{bmatrix} - \left( \begin{bmatrix} u_0 v_1 & u_0 v_0 \\ u_1 v_1 & u_1 v_0 + u_0 v_1 \end{bmatrix} - \begin{bmatrix} 0 & 0 \\ 0 & u_0 u_1 \end{bmatrix} \right)$$

$$= \begin{bmatrix} \dfrac{W^2}{(W-1)^2} & -\dfrac{W^{\frac{3}{2}}}{(W-1)^2} \\ -\dfrac{W^{\frac{3}{2}}}{(W-1)^2} & \dfrac{W^2}{(W-1)^2} \end{bmatrix} - \begin{bmatrix} \dfrac{W}{W-1}\dfrac{W}{W-1} & -\dfrac{W}{W-1}\dfrac{W^{\frac{1}{2}}}{W-1} \\ \dfrac{W^{\frac{1}{2}}}{W-1}\dfrac{W}{W-1} & \dfrac{W}{W-1}\dfrac{W}{W-1} \end{bmatrix} = \begin{bmatrix} 0 & 0 \\ 0 & 0 \end{bmatrix}. \quad (4.25)$$

**Special Case for $n = 3$**

In this special case, $\hat{W}$ is a 3-by-3 Toeplitz matrix. Each element of $\hat{W}$ is a function of the transform parameter $W$. More formally,

$$\hat{W} = \begin{bmatrix} W^{-\frac{(0-0)^2}{2}} & W^{-\frac{(0-1)^2}{2}} & W^{-\frac{(0-2)^2}{2}} \\ W^{-\frac{(1-0)^2}{2}} & W^{-\frac{(1-1)^2}{2}} & W^{-\frac{(1-2)^2}{2}} \\ W^{-\frac{(2-0)^2}{2}} & W^{-\frac{(2-1)^2}{2}} & W^{-\frac{(2-2)^2}{2}} \end{bmatrix} = \begin{bmatrix} W^0 & W^{-\frac{1}{2}} & W^{-2} \\ W^{-\frac{1}{2}} & W^0 & W^{-\frac{1}{2}} \\ W^{-2} & W^{-\frac{1}{2}} & W^0 \end{bmatrix} = \begin{bmatrix} 1 & W^{-\frac{1}{2}} & W^{-2} \\ W^{-\frac{1}{2}} & 1 & W^{-\frac{1}{2}} \\ W^{-2} & W^{-\frac{1}{2}} & 1 \end{bmatrix}.$$

$$(4.26)$$

The inverse matrix $\hat{W}^{-1}$ is also a 3-by-3 matrix, but it is no longer Toeplitz, in contrast to the 2-by-2 case. Let $\mathbf{u}$ be the first column of $\hat{W}^{-1}$, i.e.,

$$\mathbf{u} = (u_0, u_1, u_2)^T = \left( \left(\hat{W}^{-1}\right)_{1,1}, \left(\hat{W}^{-1}\right)_{2,1}, \left(\hat{W}^{-1}\right)_{3,1} \right)^T. \quad (4.27)$$

Similarly to the 2-by-2 case, the vector u is a solution to the following linear system:

$$\hat{W}\mathbf{u} = \mathbf{e}_0. \quad (4.28)$$

In contrast to the previous case, however, in this case $\mathbf{e}_0$ denotes a column vector that consists of three elements instead of two elements. The first element of $\mathbf{e}_0$ is equal to 1. The remaining two elements of $\mathbf{e}_0$ are equal to 0. In other words,

$$\mathbf{e}_0 = (1, 0, 0)^T. \quad (4.29)$$

The linear system (4.28) can be expressed in terms of the nine elements that constitute $\hat{W}$ and of the three elements that constitute $\mathbf{u}$. A result of this expansion is shown below:

$$\underbrace{\begin{bmatrix} 1 & W^{-\frac{1}{2}} & W^{-2} \\ W^{-\frac{1}{2}} & 1 & W^{-\frac{1}{2}} \\ W^{-2} & W^{-\frac{1}{2}} & 1 \end{bmatrix}}_{\hat{W}} \underbrace{\begin{bmatrix} u_0 \\ u_1 \\ u_2 \end{bmatrix}}_{\mathbf{u}} = \underbrace{\begin{bmatrix} 1 \\ 0 \\ 0 \end{bmatrix}}_{\mathbf{e}_0}. \quad (4.30)$$

This linear system can also be expressed in scalar form using a system of three equations with three unknowns. The left-hand side of each of these three equations is equal to a dot product between a row of $\hat{W}$ and the vector $\mathbf{u}$. The right-hand side is equal to the corresponding element of $\mathbf{e}_0$. More formally,

$$u_0 + u_1 W^{-\frac{1}{2}} + u_2 W^{-2} = 1, \tag{4.31}$$

$$u_0 W^{-\frac{1}{2}} + u_1 + u_2 W^{-\frac{1}{2}} = 0, \tag{4.32}$$

$$u_0 W^{-2} + u_1 W^{-\frac{1}{2}} + u_2 = 0. \tag{4.33}$$

Solving this system of linear equations leads to a formula that expresses the vector **u** as a function of the parameter W, which is shown below:

$$\mathbf{u} = \begin{bmatrix} \dfrac{W^3}{(W-1)(W^2-1)} \\ -\dfrac{W^{\frac{3}{2}}}{(W-1)(W-1)} \\ \dfrac{W^2}{(W-1)(W^2-1)} \end{bmatrix}. \tag{4.34}$$

The inverse matrix $\hat{W}^{-1}$ has the following form

$$\hat{W}^{-1} = \begin{bmatrix} \dfrac{W^3}{(W-1)(W^2-1)} & -\dfrac{W^{\frac{3}{2}}}{(W-1)^2} & \dfrac{W^2}{(W-1)(W^2-1)} \\ -\dfrac{W^{\frac{3}{2}}}{(W-1)^2} & \dfrac{W^2+1}{(W-1)^2} & -\dfrac{W^{\frac{3}{2}}}{(W-1)^2} \\ \dfrac{W^2}{(W-1)(W^2-1)} & -\dfrac{W^{\frac{3}{2}}}{(W-1)^2} & \dfrac{W^3}{(W-1)(W^2-1)} \end{bmatrix}. \tag{4.35}$$

Note that the vector **v** specifies the last column of $\hat{W}^{-1}$ and it is equal to the reverse of the vector **u,** which specifies the first column of the matrix. In other words, the previous formula confirms the three assumptions (4.4), (4.5), and (4.6).

Repeating this process for other values of n allows us to derive the general formula that determines **u.** The next section states this formula.

General Formula for Inverting the Toeplitz Matrix $\hat{W}$

In the general case, the elements of the vector **u,** which specifies the first column of $\hat{W}^{-1}$, can be computed using the following formula:

$$u_k = \left(\hat{W}^{-1}\right)_{k+1,1} = (-1)^k \frac{W^{\frac{2k^2-(2n-1)k+n(n-1)}{2}}}{\displaystyle\prod_{s=1}^{n-k-1}(W^s-1)\prod_{s=1}^{k}(W^s-1)}, \qquad \text{for each } k \in \{0, 1, 2, \ldots, n-1\}. \tag{4.36}$$

For each $k,$ the value of $u_k$ can be computed in $O(1)$ using precomputed values of the products of the polynomials that appear in the denominator of the right-hand side of (4.36). These values are computed in a separate loop, which runs in $O(n).$

The resulting value **of u** and its reverse, which is equal to **v,** can be plugged into the Gohberg-Semencul formula (3.4) to compute the inverse matrix $\hat{W}^{-1}$. It can also be used as a generating vector for efficient algorithms that compute the products of Toeplitz matrices and vectors. These algorithms can be called in a sequence that implements multiplying the matrix $\hat{W}^{-1}$ by a vector without actually storing $\hat{W}^{-1}$ in memory. This results in the ICZT algorithm that runs in $O(n \log n).$

The ICZT in Matrix Form

The following equation shows the ICZT in matrix form:

$$\mathbf{x} = \mathbf{A}^{-1}\mathbf{Q}^{-1}\hat{\mathbf{W}}^{-1}\mathbf{P}^{-1}\mathbf{X}, \qquad (4.37)$$

where diag $(A^0, A^1, ..., A^{N-1})$,

$$\mathbf{Q}^{-1} = \mathrm{diag}\left(W^{-\frac{0^2}{2}}, W^{-\frac{1^2}{2}}, ..., W^{-\frac{(N-1)^2}{2}}\right) \qquad \hat{W} \text{ and} \qquad \mathbf{P}^{-1} = \mathrm{diag}\left(W^{-\frac{0^2}{2}}, W^{-\frac{1^2}{2}}, ..., W^{-\frac{(M-1)^2}{2}}\right).$$

That is, the formula shows how to compute the CZT input vector **x** from its output vector **X.** This equation was derived by inverting the diagonal matrices in the forward transform formula (2.13) and replacing the matrix $\hat{W}$ with its inverse $\hat{W}^{-1}$.

Each matrix in formula (4.37) is either a diagonal matrix or it can be expressed as a difference of products of Toeplitz matrices. Implementing the formula leads to an *O(n* log *n)* algorithm for computing the ICZT, which is given in Algorithm 5.2, below. The algorithm performs all matrix computations efficiently by using the generating vectors to compute the results of all matrix-vector operations without storing any intermediate matrices in memory. It requires *O(n)* memory to run.

Example

In the 3-by-3 case, the CZT can be expressed with the following matrix equation:

$$\underbrace{\begin{bmatrix} X_0 \\ X_1 \\ X_2 \end{bmatrix}}_{\mathbf{X}} = \underbrace{\begin{bmatrix} W^{\frac{0^2}{2}} & 0 & 0 \\ 0 & W^{\frac{1^2}{2}} & 0 \\ 0 & 0 & W^{\frac{2^2}{2}} \end{bmatrix}}_{\mathbf{P}} \underbrace{\begin{bmatrix} 1 & W^{-\frac{1}{2}} & W^{-2} \\ W^{-\frac{1}{2}} & 1 & W^{-\frac{1}{2}} \\ W^{-2} & W^{-\frac{1}{2}} & 1 \end{bmatrix}}_{\hat{W}} \underbrace{\begin{bmatrix} W^{\frac{0^2}{2}} & 0 & 0 \\ 0 & W^{\frac{1^2}{2}} & 0 \\ 0 & 0 & W^{\frac{2^2}{2}} \end{bmatrix}}_{\mathbf{Q}} \underbrace{\begin{bmatrix} A^{-0} & 0 & 0 \\ 0 & A^{-1} & 0 \\ 0 & 0 & A^{-2} \end{bmatrix}}_{\mathbf{A}} \underbrace{\begin{bmatrix} x_0 \\ x_1 \\ x_2 \end{bmatrix}}_{\mathbf{x}},$$

$$(4.38)$$

In that case, the expanded matrix equation for the ICZT looks like this:

$$\underbrace{\begin{bmatrix} x_0 \\ x_1 \\ x_2 \end{bmatrix}}_{\mathbf{x}} = \underbrace{\begin{bmatrix} A^0 & 0 & 0 \\ 0 & A^1 & 0 \\ 0 & 0 & A^2 \end{bmatrix}}_{\mathbf{A}^{-1}} \underbrace{\begin{bmatrix} W^{-\frac{0^2}{2}} & 0 & 0 \\ 0 & W^{-\frac{1^2}{2}} & 0 \\ 0 & 0 & W^{-\frac{2^2}{2}} \end{bmatrix}}_{\mathbf{Q}^{-1}} \underbrace{\begin{bmatrix} \hat{W}_{1,1}^{-1} & \hat{W}_{1,2}^{-1} & \hat{W}_{1,3}^{-1} \\ \hat{W}_{2,1}^{-1} & \hat{W}_{2,2}^{-1} & \hat{W}_{2,3}^{-1} \\ \hat{W}_{3,1}^{-1} & \hat{W}_{3,2}^{-1} & \hat{W}_{3,3}^{-1} \end{bmatrix}}_{\hat{W}^{-1}} \underbrace{\begin{bmatrix} W^{-\frac{0^2}{2}} & 0 & 0 \\ 0 & W^{-\frac{1^2}{2}} & 0 \\ 0 & 0 & W^{-\frac{2^2}{2}} \end{bmatrix}}_{\mathbf{P}^{-1}} \underbrace{\begin{bmatrix} X_0 \\ X_1 \\ X_2 \end{bmatrix}}_{\mathbf{X}}.$$

$$(4.39)$$

The inverse matrix $\hat{W}^{-1}$ is given in (4.35). The algorithm, however, does not construct this matrix explicitly. As described above, $\hat{W}^{-1}$ can be expressed as follows:

$$u_0\hat{W}^{-1} = \underbrace{\begin{bmatrix} u_0 & 0 & 0 \\ u_1 & u_0 & 0 \\ u_2 & u_1 & u_0 \end{bmatrix}}_{\mathcal{A}} \underbrace{\begin{bmatrix} v_2 & v_1 & v_0 \\ 0 & v_2 & v_1 \\ 0 & 0 & v_2 \end{bmatrix}}_{\mathcal{C}} - \underbrace{\begin{bmatrix} 0 & 0 & 0 \\ v_0 & 0 & 0 \\ v_1 & v_0 & 0 \end{bmatrix}}_{\mathcal{B}} \underbrace{\begin{bmatrix} 0 & u_2 & u_1 \\ 0 & 0 & u_2 \\ 0 & 0 & 0 \end{bmatrix}}_{\mathcal{D}}, \qquad (4.40)$$

where the vector $\mathbf{u} = (u_0, u_1, u_2)$ is given by (4.34) and the vector $\mathbf{v} = (v_0, v_1, v_2) = (u_2, u_1, u_0)$ is the reverse of **u**. For these values of **u** and **v,** equation (4.40) has the following form:

$$
u_0 \hat{W}^{-1} = \underbrace{\begin{bmatrix} \dfrac{W^3}{(W-1)(W^2-1)} & 0 & 0 \\[2mm] \dfrac{W^4}{(W-1)^2} & \dfrac{W^3}{(W-1)(W^2-1)} & 0 \\[2mm] \dfrac{W^2}{(W-1)(W^2-1)} & \dfrac{W^4}{(W-1)^2} & \dfrac{W^3}{(W-1)(W^2-1)} \end{bmatrix}}_{\mathcal{A}} \underbrace{\begin{bmatrix} \dfrac{W^3}{(W-1)(W^2-1)} & \dfrac{W^4}{(W-1)^2} & \dfrac{W^2}{(W-1)(W^2-1)} \\[2mm] 0 & \dfrac{W^3}{(W-1)(W^2-1)} & \dfrac{W^4}{(W-1)^2} \\[2mm] 0 & 0 & \dfrac{W^3}{(W-1)(W^2-1)} \end{bmatrix}}_{\mathcal{C}}
$$

$$
\cdots \underbrace{\begin{bmatrix} 0 & 0 & 0 \\[2mm] \dfrac{W^2}{(W-1)(W^2-1)} & 0 & 0 \\[2mm] \dfrac{W^4}{(W-1)^2} & \dfrac{W^2}{(W-1)(W^2-1)} & 0 \end{bmatrix}}_{\mathcal{B}} \underbrace{\begin{bmatrix} 0 & \dfrac{W^2}{(W-1)(W^2-1)} & \dfrac{W^4}{(W-1)^2} \\[2mm] 0 & 0 & \dfrac{W^2}{(W-1)(W^2-1)} \\[2mm] 0 & 0 & 0 \end{bmatrix}}_{\mathcal{D}} .
$$

$$(4.41)$$

In addition, the matrix $\mathcal{C}$ is equal to the transpose of the matrix $\mathcal{A}$ and the matrix $\mathcal{B}$ is equal to the transpose of the matrix $\mathcal{D}$. Thus, the inverse matrix $\hat{W}^{-1}$ can be expressed in the following simplified form:

$$
\hat{W}^{-1} = \frac{1}{u_0}\left(\mathcal{A}\mathcal{A}^T - \mathcal{D}^T\mathcal{D}\right). \qquad (4.42)
$$

Furthermore, both $\mathcal{A}$ and $\mathcal{D}$ can be generated from the elements of the vector **u.**

Substituting (4.42) into (4.37) leads to the following matrix equation for the ICZT:

$$
\mathbf{x} = \frac{1}{u_0}\mathbf{A}^{-1}\mathbf{Q}^{-1}\left(\mathcal{A}\mathcal{A}^T - \mathcal{D}^T\mathcal{D}\right)\mathbf{P}^{-1}\mathbf{X}. \qquad (4.43)
$$

Instead, equation (4.43) is computed efficiently by exploiting the structure of these matrices. As described above, these four Toeplitz matrices are not constructed explicitly.

The CZT Algorithm and the ICZT Algorithm

Algorithm 5.1 gives the pseudo-code for the CZT algorithm. The algorithm uses the convolution based algorithm TOEPLITZMULTIPLYC, which is described in Appendix E, to multiply a Toeplitz matrix by a vector. Other algorithms for computing the product of a Toeplitz matrix and a vector can be used instead. For example, both TOEPLITZMULTIPLYE described in Appendix C and TOEPLITZMULTIPLYP described in Appendix D can replace TOEPLITZMULTIPLYC in Algorithm 5.1 without changing its computational complexity.

---

**Algorithm 5.1** Algorithm for the CZT. Runs in $O(n \log n)$.

1: $\mathrm{CZT}(\mathbf{x},\ M,\ W = e^{-\frac{2\pi j}{M}},\ A = 1)$
2: $N \leftarrow \mathrm{LENGTH}(\mathbf{x})$;
3: $n \leftarrow \max(M, N)$;
4: $\hat{\mathbf{w}} \leftarrow \mathrm{EMPTYARRAY}(n)$;
5: **for** $k \leftarrow 0$ **to** $n - 1$ **do**
6:     $\hat{w}[k] \leftarrow W^{\frac{k^2}{2}}$;
7: **end for**
8: $\mathbf{X} \leftarrow \mathrm{EMPTYARRAY}(N)$;
9: $\mathbf{r} \leftarrow \mathrm{EMPTYARRAY}(N)$;
10: $\mathbf{c} \leftarrow \mathrm{EMPTYARRAY}(M)$;
11: **for** $k \leftarrow 0$ **to** $N - 1$ **do**
12:     $X[k] \leftarrow A^{-k} \cdot \hat{w}[k] \cdot x[k]$;
13:     $r[k] \leftarrow \dfrac{1}{\hat{w}[k]}$;
14: **end for**
15: **for** $k \leftarrow 0$ **to** $M - 1$ **do**
16:     $c[k] \leftarrow \dfrac{1}{\hat{w}[k]}$;
17: **end for**
18: $\mathbf{X} \leftarrow \mathrm{TOEPLITZMULTIPLYC}(\mathbf{r},\ \mathbf{c},\ \mathbf{X})$;    // after this line, $\mathrm{LENGTH}(\mathbf{X}) = M$
19: **for** $k \leftarrow 0$ **to** $M - 1$ **do**
20:     $X[k] \leftarrow X[k] \cdot \hat{w}[k]$;
21: **end for**
22: **return** $\mathbf{X}$;

---

Algorithm 5.2 gives the pseudo-code for the ICZT algorithm. It implements the inverse formula (4.42) without actually storing any matrices in memory. The algorithm runs in $O(n \log n)$, where $n = \max(M, N)$. This implementation supports only the case $n = M = N$. As described above, the function TOEPLITZMULTIPLYC, which is used on lines 23-26, can be replaced with TOEPLITZMULTIPLYE or TOEPLITZMULTIPLYP, without changing the computational complexity of the algorithm.

---

**Algorithm 5.2** Algorithm for the ICZT with input and output of equal sizes. Runs in $O(n \log n)$.

```
1:  ICZT(X, N, W=e^{-\frac{2\pi i}{N}}, A=1)
2:    M ← LENGTH(X);
3:    if M ≠ N then
4:      ERROR("Only the case when M = N is supported by this algorithm.");
5:    end if
6:    n ← N;
7:    x ← EMPTYARRAY(n);
8:    // Multiply X by diag(W^{-\frac{0}{2}}, W^{-\frac{1}{2}}, ..., W^{-\frac{(n-1)^2}{2}}) and store the result in x.
9:    for k ← 0 to n − 1 do
10:     x[k] ← X[k] · W^{-\frac{k^2}{2}};
11:   end for
12:   // Pre-compute the necessary polynomial products.
13:   p ← EMPTYARRAY(n);
14:   p[0] ← 1;
15:   for k ← 1 to n − 1 do
16:     p[k] ← p[k−1] · (W^k − 1);
17:   end for
18:   // Compute the generating vector u.
19:   u ← EMPTYARRAY(n);
20:   for k ← 0 to n − 1 do
21:     u[k] ← (−1)^k · \frac{W^{\frac{2k^2-(2n-1)k+n(n-1)}{2}}}{p[n-k-1] · p[k]};
22:   end for
23:   x' ← TOEPLITZMULTIPLYC((0, u[n−1], u[n−2], ..., u[2], u[1]), (0, 0, ..., 0), x);   // D
                                                                    n zeros
24:   x' ← TOEPLITZMULTIPLYC((0, 0, ..., 0), (0, u[n−1], u[n−2], ..., u[1]), x');   // D^T
                          n zeros
25:   x'' ← TOEPLITZMULTIPLYC(u, (u[0], 0, 0, ..., 0), x);   // A^T
                                          n−1 zeros
26:   x'' ← TOEPLITZMULTIPLYC((u[0], 0, 0, ..., 0), u, x'');   // A
                                      n−1 zeros
27:   for k ← 0 to n − 1 do
28:     x[k] ← \frac{x''[k] − x'[k]}{u[0]};
29:   end for
30:   // Multiply x by diag(A^0 W^{-\frac{0^2}{2}}, A^1 W^{-\frac{1^2}{2}}, A^2 W^{-\frac{4^2}{2}}, ..., A^{n-1} W^{-\frac{(n-1)^2}{2}}) in place.
31:   for k ← 0 to n − 1 do
32:     x[k] ← x[k] · A^k · W^{-\frac{k^2}{2}};
33:   end for
34:   return x;
```

---

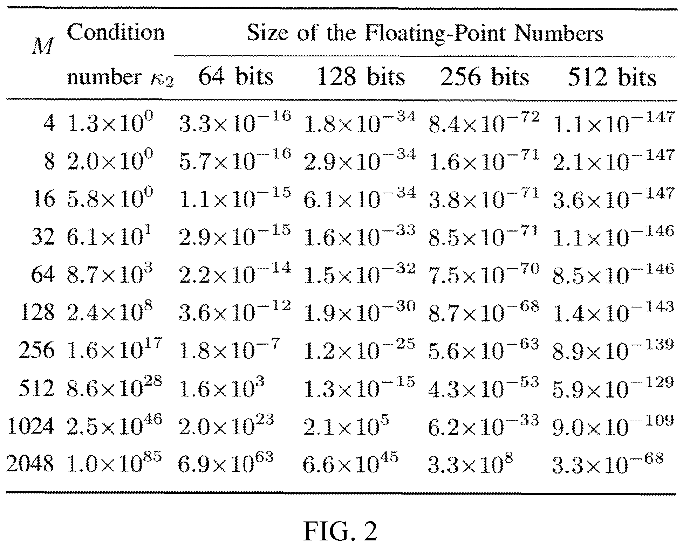

FIG. 2 gives the numerical accuracy of the ICZT as a function of the transform size $M$ and the number of bits used by the floating-point numbers during the computations. The two logarithmic spiral contours in FIGS. 1A-1B correspond to $M=32$ and $M=64$ in FIG. 2. The value of $A$ was set to 1.1 for all rows of FIG. 2. The value of $W$ was determined using the formula $\sqrt[M]{1.2} \times \exp\left(\frac{i2\pi}{M}\right)$. The numerical accuracy was computed by performing the CZT followed by the ICZT and computing the Euclidean distance between the input of the CZT and the output of the ICZT. The final accuracy was averaged over 100 random input vectors. The second column in FIG. 2 shows the condition number of the transformation matrix. Despite the high condition numbers, this problem is solvable even for large values of $M$ when high precision floating-point numbers are used.

Algorithm 5.3 gives the pseudo-code for the ICZT-RECT algorithm, which implements the inverse algorithm for the case when $N \leq M$. This algorithm calls Algorithm 5.2 with the second parameter set to $M$ and then returns only the first $N$ elements of its output vector.

---

**Algorithm 5.3** ICZT algorithm for the case when $N \leq M$. Runs in $O(n \log n)$.

---

1: ICZT-RECT($\mathbf{X}$, $N$, $W$, $A$)

2: $M \leftarrow$ LENGTH($\mathbf{X}$);

3: **if** $N > M$ **then**

4:     ERROR("Only the case when $N \leq M$ is supported by this algorithm.");

5: **end if**

6: $\mathbf{x} \leftarrow$ ICZT($\mathbf{X}$, $M$, $W$, $A$);

7: **return** $(x[0], x[1], x[2], \ldots, x[N-1])$;

---

Having described the ICZT algorithm, applications for the algorithm are now provided. In that regard, the following is just a partial list of some useful applications of the ICZT algorithm. In embodiments, the ICZT algorithm is used in applications for generating or analyzing the data received from or sent to radar-based sensors. In other embodiments, the ICZT algorithm is used in applications for generating or analyzing the data received from or sent to sonar sensors. In still other embodiments, the ICZT algorithm is used in applications for generating or analyzing the data received from or sent to other range-based sensors.

In yet other embodiments, the ICZT algorithm is used in hardware implementations of the ICZT algorithm. In embodiments, the hardware implementation is a variety of systems including a memory device and a processor, e.g., a personal computer, a chip (e.g., system-on-a-chip), a system comprising an application-specific integrated circuit (ASIC), a system comprising a graphics processing unit (GPU), or a field-programmable gate array (FPGA).

In further embodiments, the ICZT algorithm is used in improving the speed of applications that need to compute the ICZT by replacing slower methods that invert the matrix explicitly or solve an explicitly-formulated linear system. Additionally, the ICZT algorithm can replace the conventionally used FFT and IFFT in whole or in part. This replacement can extend the scope of a computational system to cover points on logarithmic spiral contours that may be located inside or outside the unit circle. Still further, prior to or during computing of the ICZT, the frequency domain vector can be modified such that the time domain vector returned by the ICZT is different from the time domain vector used to generate the frequency domain vector. For example, an operation can be performed on the frequency domain vector, such as filtering certain elements or frequencies from the vector.

Further, in embodiments, the ICZT algorithm is used in medical imaging applications, e.g., CT, PET, or MRI. Additionally, the ICZT algorithm is used in applications in signal processing, signal analysis, signal synthesis, speech and audio processing, and image processing. In signal processing applications, the input vector of the CZT or FFT may be a time-domain vector derived from an audio or image signal, such as by sampling the signal. The output vector of the CZT or FFT may then be a frequency domain vector representation of those signals.

The following Appendices A-E provide additional information regarding the implementation of the ICZT algorithm.

Appendix A: Reversing the Direction of the Logarithmic Spiral Contour to Improve the Numerical Accuracy of the CZT and the ICZT

This appendix describes alternative versions of the CZT and the ICZT algorithms that improve the numerical accuracy of the computed transforms. This is achieved by reversing the direction of the chirp contour when $|W| < 1$ and keeping the original direction when $|W| \geq 1$. The parameters for the reversed contour are $W' = W^{-1}$ and $A' = AW^{-(M-1)}$. Depending on the concrete values of the transform parameters, the improvement of the numerical accuracy may exceed several orders of magnitude.

Algorithm A.1 gives the pseudo-code for the alternative version of the CZT algorithm that performs contour reversal when $|W| < 1$. Algorithm A.2 gives the pseudo-code for the alternative version of the ICZT algorithm that also performs contour reversal in that case.

Using these algorithms, the numerical accuracy of both the CZT and the ICZT can be improved for chirp contours that are growing logarithmic spirals, i.e., when $|W| < 1$. In those cases, Algorithm A.1 and Algorithm A.2 reverse the direction of the chirp contour. Furthermore, this reversal is accompanied by a reversal of the order of the elements in the vector X, which is the CZT output vector in Algorithm A.1 and the ICZT input vector in Algorithm A.2.

---

**Algorithm A.1** | CZT algorithm that reverses the direction of the chirp contour when $|W| < 1$. Runs in $O(n \log n)$.

---

1: CZT-R($\mathbf{x}$, $M$, $W$, $A$)
2: **if** $|W| \geq 1$ **then**
3:    $\mathbf{X} \leftarrow$ CZT($\mathbf{x}$, $M$, $W$, $A$);          // original contour
4: **else**
5:    // Swap the start and the end point of the chirp contour.
6:    $A' \leftarrow A W^{-(M-1)}$;
7:    $W' \leftarrow 1/W$;
8:    $\mathbf{X}' \leftarrow$ CZT($\mathbf{x}$, $M$, $W'$, $A'$);        // reversed contour
9:    $\mathbf{X} \leftarrow$ EMPTYARRAY($M$);
10:    **for** $k \leftarrow 0$ **to** $M-1$ **do**      // reverse the output vector
11:      $X[k] \leftarrow X'[M-1-k]$;
12:    **end for**
13: **end if**
14: **return** $\mathbf{X}$;

---

---

**Algorithm A.2** | ICZT algorithm that reverses the direction of the chirp contour when $|W| < 1$. Runs in $O(n \log n)$.

---

1: ICZT-R($\mathbf{X}$, $N$, $W$, $A$)
2: $M \leftarrow$ LENGTH($\mathbf{X}$);
3: **if** $|W| \geq 1$ **then**
4:    $\mathbf{x} \leftarrow$ ICZT($\mathbf{X}$, $N$, $W$, $A$);          // original contour
5: **else**
6:    $A' \leftarrow A W^{-(M-1)}$;
7:    $W' \leftarrow 1/W$;
8:    $\mathbf{X}' \leftarrow$ EMPTYARRAY($M$);
9:    **for** $k \leftarrow 0$ **to** $M-1$ **do**      // reverse the input vector
10:      $X'[k] \leftarrow X[M-1-k]$;
11:    **end for**
12:    $\mathbf{x} \leftarrow$ ICZT($\mathbf{X}'$, $N$, $W'$, $A'$);      // reversed contour
13: **end if**
14: **return** $\mathbf{x}$;

---

Appendix B: FFT and Inverse FFT Algorithms

This appendix states the FFT algorithm and the inverse FFT algorithm. Algorithm B.1 gives pseudo-code for the Fast Fourier Transform (FFT). Algorithm B.2 gives pseudo-code for the inverse Fast Fourier Transform (IFFT). Both the FFT and the IFFT run in *O(n* log *n).*

---

**Algorithm B.1** | FFT algorithm. Runs in $O(n \log n)$.

---

1: FFT(**x**)
2: $n \leftarrow$ LENGTH(**x**);
3: **if** $n = 1$ **then**
4:   **return x**;
5: **end if**
6: $\mathbf{x_E} \leftarrow (x[0], x[2], \ldots, x[n-2])$;    // even
7: $\mathbf{x_O} \leftarrow (x[1], x[3], \ldots, x[n-1])$;    // odd
8: $\mathbf{y'} \leftarrow$ FFT($\mathbf{x_E}$);
9: $\mathbf{y''} \leftarrow$ FFT($\mathbf{x_O}$);
10: **y** $\leftarrow$ EMPTYARRAY($n$);
11: **for** $k \leftarrow 0$ **to** $n/2 - 1$ **do**
12:   $w \leftarrow e^{-\frac{i 2\pi k}{n}}$;
13:   $y[k] \qquad \leftarrow y'[k] + w \cdot y''[k]$;
14:   $y[k + (n/2)] \leftarrow y'[k] - w \cdot y''[k]$;
15: **end for**
16: **return y**;

---

**Algorithm B.2** | Inverse FFT algorithm. Runs in $O(n \log n)$.

---

1: IFFT(**y**)
2: $n \leftarrow$ LENGTH(**y**);
3: **if** $n = 1$ **then**
4:   **return y**;
5: **end if**
6: $\mathbf{y_E} \leftarrow (y[0], y[2], \ldots, y[n-2])$;    // even
7: $\mathbf{y_O} \leftarrow (y[1], y[3], \ldots, y[n-1])$;    // odd
8: $\mathbf{x'} \leftarrow$ IFFT($\mathbf{y_E}$);
9: $\mathbf{x''} \leftarrow$ IFFT($\mathbf{y_O}$);
10: **x** $\leftarrow$ EMPTYARRAY($n$);
11: **for** $k \leftarrow 0$ **to** $n/2 - 1$ **do**
12:   $w \leftarrow e^{\frac{i 2\pi k}{n}}$;
13:   $x[k] \qquad \leftarrow (x'[k] + w \cdot x''[k])/2$;
14:   $x[k + (n/2)] \leftarrow (x'[k] - w \cdot x''[k])/2$;
15: **end for**
16: **return x**;

---

Appendix C: Multiplying a Toeplitz Matrix by a Vector

This appendix describes a popular method for multiplying a Toeplitz matrix by a vector. Let **A** be a $n$ x $n$ Toeplitz matrix and let **x** be a vector. The matrix **A** is specified by its first row **r** and its first column **c**, where it is assumed that $r_0$ is equal to $c_0$. The example in this appendix assumes that n is a power of 2. The approach, however, can be modified to work for other values of n. More formally,

$$\mathbf{A} = \begin{bmatrix} c_0 & r_1 & \cdots & r_{n-1} \\ c_1 & c_0 & \cdots & r_{n-2} \\ \vdots & \vdots & \ddots & \vdots \\ c_{n-1} & c_{n-2} & \cdots & c_0 \end{bmatrix}, \quad \mathbf{x} = \begin{bmatrix} x_0 \\ x_1 \\ \vdots \\ x_{n-1} \end{bmatrix}. \qquad (C.1)$$

To compute the product **y** = **Ax** efficiently using an FFT-based algorithm, it is possible to embed **A** into a $2n$ x $2n$ circulant matrix **Â** as shown below:

$$\hat{\mathbf{A}} = \left[\begin{array}{cccc|cccccc} c_0 & r_1 & \cdots & r_{n-1} & 0 & c_{n-1} & c_{n-2} & \cdots & c_1 \\ c_1 & c_0 & \cdots & r_{n-2} & r_{n-1} & 0 & c_{n-1} & \cdots & c_2 \\ \vdots & \vdots & \ddots & \vdots & \vdots & \vdots & \vdots & \ddots & \vdots \\ c_{n-1} & c_{n-2} & \cdots & c_0 & r_1 & r_2 & r_3 & \cdots & 0 \\ \hline 0 & c_{n-1} & \cdots & c_1 & c_0 & r_1 & r_2 & \cdots & r_{n-1} \\ r_{n-1} & 0 & \cdots & c_2 & c_1 & c_0 & r_1 & \cdots & r_{n-2} \\ \vdots & \vdots & \ddots & \vdots & \vdots & \vdots & \vdots & \ddots & \vdots \\ r_1 & r_2 & \cdots & 0 & c_{n-1} & c_{n-2} & c_{n-3} & \cdots & c_0 \end{array}\right]. \qquad (C.2)$$

The vector $\mathbf{x}$ is padded with $n$ zeros at the end, which results in a vector $\hat{x}$ of length 2n:

$$\hat{\mathbf{x}} = \left[\begin{array}{c} x_0 \\ x_1 \\ \vdots \\ x_{n-1} \\ \hline 0 \\ 0 \\ \vdots \\ 0 \end{array}\right]. \qquad (C.3)$$

The product of $\hat{\mathbf{A}}$ and $\hat{x}$ can be computed using an FFT-based algorithm in $O(n \log n)$. That is, the goal is to compute a vector $\hat{\mathbf{y}}$ of length $2n$, which is equal to $\hat{\mathbf{A}}\,\hat{x}$. More formally,

$$\hat{\mathbf{A}}\hat{\mathbf{x}} = \hat{\mathbf{y}} = \left[\begin{array}{c} \hat{y}_0 \\ \hat{y}_1 \\ \vdots \\ \hat{y}_{n-1} \\ \hline \hat{y}_n \\ \hat{y}_{n+1} \\ \vdots \\ \hat{y}_{2n-1} \end{array}\right]. \qquad (C.4)$$

The first n elements **of $\hat{\mathbf{y}}$** are equal to the corresponding elements **of y,** i.e., $y_k = \hat{y}_k$ for each $k \in \{0, 1, 2, ..., n-1\}$.

It only remains to show how to multiply a (2n)-by-(2n) circulant matrix $\mathbf{B}$ by a vector $\mathbf{v}$ of length 2n using FFT and IFFT. The matrix $\mathbf{B}$ is generated by its first column vector $\mathbf{b}$. More formally, let

$$\mathbf{B} = \left[\begin{array}{cccc} b_0 & b_{2n-1} & \cdots & b_1 \\ b_1 & b_0 & \cdots & b_2 \\ \vdots & \vdots & \ddots & \vdots \\ b_{2n-1} & b_{2n-2} & \cdots & b_0 \end{array}\right], \qquad \mathbf{v} = \left[\begin{array}{c} v_0 \\ v_1 \\ \vdots \\ v_{2n-1} \end{array}\right], \qquad \mathbf{b} = \left[\begin{array}{c} b_0 \\ b_1 \\ \vdots \\ b_{2n-1} \end{array}\right]. \qquad (C.5)$$

This product can be computed using the DFT and the inverse DFT, which follows from the circular convolution theorem. In other words, each element $(\mathbf{Bv})_k$ of the product is equal to the $k$-th element in the circular convolution of $\mathbf{b}$ and $\mathbf{v}$. That is,

$$DFT(\mathbf{B}\,\mathbf{v}) = DFT(\mathbf{b}) \times DFT(\mathbf{v}), \qquad (C.6)$$

where $\times$ denotes elementwise multiplication. Therefore,

$$\mathbf{B}\,\mathbf{v} = DFT^{-1}\,(DFT(\mathbf{b}) \times DFT(\mathbf{v})). \qquad (C.7)$$

The DFT and the inverse DFT can be computed using the FFT and the inverse FFT, i.e.,

$$\mathbf{B}\,\mathbf{v} = FFT^{-1}\,(FFT(\mathbf{b}) \times FFT(\mathbf{v})). \qquad (C.8)$$

To summarize, the product of an n-by-n Toeplitz matrix and a vector, where n is assumed to be a power of two, can be computed using the following six steps: 1) go from Toeplitz to circulant by concatenating the first column, a single zero, and the reverse of the last n-1 elements of the first row; 2) pad the vector with *n* zeros at the end; 3) compute the DFT of the first column of the circulant matrix; 4) compute the DFT of the padded vector; 5) multiply the two DFTs elementwise; 6) compute the inverse DFT of the elementwise product; and 7) return the first n elements of the result vector computed by the inverse DFT. Use an FFT algorithm to compute the DFT and an IFFT algorithm to compute the inverse DFT. Note that in step 1) neither the Toeplitz matrix nor the circulant matrix is explicitly computed. Instead, only their generating vectors are used to perform the necessary computations.

Algorithm C.1 gives the pseudo-code for the algorithm described above. The computational complexity of this algorithm is *O(n* log *n)*. The name of the function is TOEPLITZMULTIPLYE, where the 'E' abbreviates 'embedding'.

Instead of including the FFT computations in the algorithms, it is possible to use FCIRCULANTMULTIPLY (see Algorithm D.2, below). However, FCIRCULANTMULTIPLY does *O*(n) more work than the sequence of FFT computations because it has to compute $\sqrt[n]{f}$ and $\sqrt[n]{f^k}$ for each $k \in \{0, 1, \dots, n-1\}$.

```
Algorithm C.1  Multiply a Toeplitz matrix by a vector in O(n log n) operations using the FFT.
 1: TOEPLITZMULTIPLYE(r, c, x)
 2: // Compute the product y = A x of a Toeplitz matrix A and a vector x where A is specified
 3: // by its first row r = (r[0], r[1], r[2],..., r[n − 1]) and its first column
 4: // c = (c[0], c[1], c[2],..., c[n − 1]). That is, A_{i,j} = r[j − 1] for each j ∈ {1, 2,...,n} and
 5: // A_{i,1} = c[i − 1] for each i ∈ {1, 2,...,n}.
 6: // The algorithm multiplies a circulant matrix derived from A by a vector obtained by
 7: // padding x with zeros, which is computed using the FFT-based convolution approach.
 8: // This algorithm uses Cooley–Tukey FFT, which requires n to be a nonnegative power of two.
 9: n ← LENGTH(r);
10: if LENGTH(x) ≠ n then
11:    error("The length of x must be equal to the length of r.");
12: end if
13: if LENGTH(c) ≠ n then
14:    error("The length of c must be equal to the length of r.");
15: end if
16: if r[0] ≠ c[0] then
17:    error("The first element of r must be equal to the first element of c.");
18: end if
19: // Form an array a by concatenating c, a single zero, and the reverse of the tail of r.
20: a ← (c[0], c[1], c[2],..., c[n − 1], 0, r[n − 1], r[n − 2],...,r[1]);   // the length of a is 2n
21: A ← FFT(a);
22: x̂ ← (x[0], x[1],..., x[n − 1], 0, 0,..., 0);   // pad x with n zeros and store the result in x̂
                                    n zeros
23: X̂ ← FFT(x̂);
24: Ŷ ← EMPTYARRAY(2n);
25: for k ← 0 to 2n − 1 do
26:    Ŷ[k] ← A[k] · X̂[k];   // elementwise product of A and X̂
27: end for
28: // Compute the inverse FFT of Ŷ and store the result in the array ŷ.
29: ŷ ← IFFT(Ŷ);
30: // The length of ŷ is equal to 2n. The result is the first half of ŷ.
31: y ← (ŷ[0], ŷ[1], ŷ[2],...,ŷ[n − 1]);
32: // Alternatively, y can be computed using FCIRCULANTMULTIPLY(1, a, x).
33: return y;
```

Appendix D: Toeplitz Vector Product Using Pustylnikov's Decomposition

An algorithm for multiplying a Toeplitz matrix by a vector can be formulated using Pustylnikov's decomposition. This algorithm does not embed a Toeplitz matrix into a circulant matrix as described in Appendix C. Instead, this appendix describes a different version of TOEPLITZMULTIPLY.

An example that illustrates this algorithm is shown below. Let A be the following 4-by-4 Toeplitz matrix, which is generated by its first row r and its first column c.

$$\mathbf{A} = \begin{bmatrix} 1 & 2 & 3 & 4 \\ 5 & 1 & 2 & 3 \\ 6 & 5 & 1 & 2 \\ 7 & 6 & 5 & 1 \end{bmatrix} = \begin{bmatrix} c_0 & r_1 & r_2 & r_3 \\ c_1 & c_0 & r_1 & r_2 \\ c_2 & c_1 & c_0 & r_1 \\ c_3 & c_2 & c_1 & c_0 \end{bmatrix} = \begin{bmatrix} r_0 & r_1 & r_2 & r_3 \\ c_1 & r_0 & r_1 & r_2 \\ c_2 & c_1 & r_0 & r_1 \\ c_3 & c_2 & c_1 & r_0 \end{bmatrix} \qquad (D.1)$$

Then, A can be decomposed into the sum of two matrices as follows:

$$\mathbf{A} = \mathbf{A}' + \mathbf{A}'', \qquad (D.2)$$

23

where **A'** is a circulant matrix and **A"** is an f-circulant matrix with $f = -1$ (i.e., a skew-circulant matrix). For this example, these two matrices have the following form:

$$
\mathbf{A}' = \frac{1}{2}
\begin{bmatrix}
2 & 9 & 9 & 9 \\
9 & 2 & 9 & 9 \\
9 & 9 & 2 & 9 \\
9 & 9 & 9 & 2
\end{bmatrix}, \qquad
\mathbf{A}'' = \frac{1}{2}
\begin{bmatrix}
0 & -5 & -3 & -1 \\
1 & 0 & -5 & -3 \\
3 & 1 & 0 & -5 \\
5 & 3 & 1 & 0
\end{bmatrix}.
\tag{D.3}
$$

The formula for computing the values of **A'** and **A"** is provided below. Let $\mathbf{a}' = (a'_0, a'_1, a'_2, \ldots, a'_{n-1})$ be the first column of **A'**, i.e.,

$$
\mathbf{A}' =
\begin{bmatrix}
a'_0 & a'_{n-1} & a'_{n-2} & \cdots & a'_1 \\
a'_1 & a'_0 & a'_{n-1} & \cdots & a'_2 \\
a'_2 & a'_1 & a'_0 & \cdots & a'_3 \\
\vdots & \vdots & \vdots & \ddots & \vdots \\
a'_{n-1} & a'_{n-2} & a'_{n-3} & \cdots & a'_0
\end{bmatrix}.
\tag{D.4}
$$

Similarly, let $\mathbf{a}'' = (a''_0, a''_1, a'_2, \ldots, a''_{n-1})$ be the first column of **A"**. That is,

$$
\mathbf{A}'' =
\begin{bmatrix}
a''_0 & -a''_{n-1} & -a''_{n-2} & \cdots & -a''_1 \\
a''_1 & a''_0 & -a''_{n-1} & \cdots & -a''_2 \\
a''_2 & a''_1 & a''_0 & \cdots & -a''_3 \\
\vdots & \vdots & \vdots & \ddots & \vdots \\
a''_{n-1} & a''_{n-2} & a''_{n-3} & \cdots & a''_0
\end{bmatrix}.
\tag{D.5}
$$

Then, the elements of **a'** and **a"** can be computed using the following formulas:

$$
a'_k =
\begin{cases}
r_0, & \text{if } k = 0, \\
\frac{1}{2}(c_k + r_{n-k}), & \text{if } k \in \{1, 2, \ldots, n-1\},
\end{cases}
\tag{D.6}
$$

$$
a''_k =
\begin{cases}
0, & \text{if } k = 0, \\
\frac{1}{2}(c_k - r_{n-k}) & \text{if } k \in \{1, 2, \ldots, n-1\},
\end{cases}
\tag{D.7}
$$

where r is the first row of A and c is its first column.

Algorithm D.1 gives the pseudo-code for the algorithm described above. The name of the function is TOEPLITZMULTIPLYP, where 'P' abbreviates 'Pustylnikov'. Lines 27 and 28 call Algorithm D.2, which is described below. The algorithm runs in $O(n \log n)$ time.

**Algorithm D.1** Multiply a Toeplitz matrix by a vector using Pustyhnikov's decomposition.

```
1:  TOEPLITZMULTIPLYP(r, c, x)
2:  // Compute the product y = A x of a Toeplitz matrix A and a vector x where A is specified
3:  // by its first row r = (r[0], r[1], r[2], ..., r[n − 1]) and its first column
4:  // c = (c[0], c[1], c[2], ..., c[n − 1]). That is, A_{i,j} = r[j − 1] for each j ∈ {1, 2, ..., n} and
5:  // A_{i,1} = c[i − 1] for each i ∈ {1, 2, ..., n}.
6:  // The algorithm completes in O(n log n) primitive operations. This is accomplished using
7:  // Pustyhnikov's decomposition and an FFT-based algorithm for computing the product of
8:  // an f-circulant matrix and a vector.
9:  n ← LENGTH(r);
10: if LENGTH(x) ≠ n then
11:     error("The length of x must be equal to the length of r.");
12: end if
13: if LENGTH(c) ≠ n then
14:     error("The length of c must be equal to the length of r.");
15: end if
16: if r[0] ≠ c[0] then
17:     error("The first element of r must be equal to the first element of c.");
18: end if
19: a′ ← EMPTYARRAY(n);
20: a″ ← EMPTYARRAY(n);
21: a′[0] = r[0];
22: a″[0] = 0;
23: for k ← 1 to n − 1 do
24:     a′[k] = 1/2 (c[k] + r[n − k]);
25:     a″[k] = 1/2 (c[k] − r[n − k]);
26: end for
27: y′ ← FCIRCULANTMULTIPLY(1, a′, x);          // see Algorithm D.2
28: y″ ← FCIRCULANTMULTIPLY(−1, a″, x);
29: y ← EMPTYARRAY(n);
30: for k ← 0 to n − 1 do
31:     y[k] ← y′[k] + y″[k];
32: end for
33: return y;
```

Algorithm D.2 gives the pseudo-code for the function FCIRCULANTMULTIPLY (for multiplying an f-circulant matrix by a vector), which was used in Algorithm D.1. It runs in O(n log n).

```
Algorithm D.2  FFT-based algorithm for multiplying an f-circulant matrix by a vector.
 1: FCIRCULANTMULTIPLY(f, a, x)
 2: if f = 0 then
 3:    error("f must be non-zero");
 4: end if
 5: n ← LENGTH(a);
 6: if LENGTH(x) ≠ n then
 7:    error("The length of x must be equal to the length of a.");
 8: end if
 9: y ← ⁿ√f;      // compute the n-th complex root of f and store its value in g
10: ğ ← EMPTYARRAY(n);    // allocate an array ğ for storing the precomputed values of f^(k/n)
11: ğ[0] ← 1;
12: for k ← 1 to n − 1 do
13:    ğ[k] ← ğ[k − 1] · y;
14: end for
15: // Allocate an array â for storing the products of the elements of a and the corresponding
16: // powers of ⁿ√f, which are stored in the array ğ.
17: â ← EMPTYARRAY(n);
18: for k ← 0 to n − 1 do
19:    â[k] ← a[k] · ğ[k];
20: end for
21: Â ← FFT(â);    // compute the DFT of â and store it in the array Â
22: // Allocate an array x̌ for storing the products of the elements of a and the corresponding
23: // powers of ⁿ√f, which are given by the array ğ.
24: x̌ ← EMPTYARRAY(n);
25: for k ← 0 to n − 1 do
26:    x̌[k] ← x[k] · ğ[k];
27: end for
28: X̌ ← FFT(x̌);    // compute the DFT of x̌ and store it in the array X̌
29: Y ← EMPTYARRAY(n);
30: for k ← 0 to n − 1 do
31:    Y[k] ← Â[k] · X̌[k];
32: end for
33: y ← IFFT(Y);    // compute the inverse DFT of Y and store the result in an array y
34: for k ← 0 to n − 1 do
35:    y[k] ← y[k]/ğ[k];    // divide y[k] by f^(k/n) in place
36: end for
37: return y;
```

Appendix E: Toeplitz Vector Product with FFT-based Convolution

Algorithm E.1 shows the pseudo-code for yet another algorithm for multiplying a Toeplitz matrix by a vector. The function name in this case is TOEPLITZMULTIPLYC, where 'C' abbreviates convolution. The computational complexity of the algorithm is $O(n \log n)$. This algorithm can be interpreted as a form of circulant embedding, similarly to the approach described in Appendix C.

```
Algorithm E.1  Multiplies a Toeplitz matrix by a vector using convolution. Runs in O(n log n).
 1: TOEPLITZMULTIPLYC(r, c, x)
 2:   N ← LENGTH(r);
 3:   if LENGTH(x) ≠ N then
 4:     error("The length of x must be equal to the length of r.");
 5:   end if
 6:   M ← LENGTH(c);
 7:   if r[0] ≠ c[0] then
 8:     error("The first element of r must be equal to the first element of c.");
 9:   end if
10:   n ← M + N − 1;
11:   t ← EMPTYARRAY(n);
12:   for k ← 0 to N − 1 do
13:     t[k] ← r[N − 1 − k];
14:   end for
15:   for k ← 0 to M − 2 do
16:     t[N + k] ← c[1 + k];
17:   end for
18:   u ← FFTCONVOLVE(t, x);   // see Algorithm E.2
19:   y ← EMPTYARRAY(M);
20:   for k ← 0 to M − 1 do
21:     y[k] ← u[N − 1 + k];
22:   end for
23:   return y;
```

Algorithm E.2 gives the pseudo-code for an FFT-based convolution algorithm, which is an *O(n* log *n)* method for computing discrete convolution. It was used in Algorithm E.1.

```
Algorithm E.2  FFT-based convolution algorithm. Runs in O(n log n).
1: FFTConvolve(a, b)
2: n_a ← Length(a);
3: n_b ← Length(b);
4: L ← n_a + n_b − 1;      // set L to the length of a * b
5: n ← 2^⌈log₂ L⌉;         // set n to the smallest power of 2 that is ≥ L
6: â ← EmptyArray(n);
7: for k ← 0 to n_a − 1 do
8:     â[k] ← a[k];
9: end for
10: for k ← n_a to n − 1 do
11:     â[k] ← 0;
12: end for
13: b̂ ← EmptyArray(n);
14: for k ← 0 to n_b − 1 do
15:     b̂[k] ← b[k];
16: end for
17: for k ← n_b to n − 1 do
18:     b̂[k] ← 0;
19: end for
20: â ← FFT(â);
21: b̂ ← FFT(b̂);
22: ŷ ← EmptyArray(n);
23: for k ← 0 to n − 1 do
24:     ŷ[k] ← â[k] · b̂[k];
25: end for
26: ŷ ← IFFT(ŷ);
27: y ← EmptyArray(L);
28: for k ← 0 to L − 1 do
29:     y[k] ← ŷ[k];
30: end for
31: return y;
```

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any nonclaimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

**Claims**

1. A method of processing audio or image signals using a computational system comprising a processor and a memory device, wherein the processor executes an algorithm to invert a Chirp Z-Transform, CZT, wherein the CZT has parameters $A$ and $W$ that define a logarithmic spiral contour in the complex plane through formula $A\,W^{-k}$ for $k = 0,1,2,...,M-1$, wherein the CZT is capable of being expressed as $\mathbf{X} = \mathbf{W}\mathbf{A}\,\mathbf{x}$ in which $\mathbf{W}$ is a Vandermonde matrix having dimensions $M$-by-$N$ defined by the parameter $W$ and its powers, $\mathbf{A}$ is a first diagonal matrix defined by the parameter $A$ and its powers, $\mathbf{x}$ is a first vector being a time domain vector derived from an audio or image signal, and $\mathbf{X}$ is a second vector being a frequency domain vector that is computed from the first vector $\mathbf{x}$ using the CZT such that the $k$-th element of $\mathbf{X}$ is given by $X_k = \sum_{j=0}^{N-1} x_j \left(A\,W^{-k}\right)^{-j}$, for $k = 0,1,2,...,M-1$, wherein $A$ and $W$ are non-zero complex numbers, the method comprising the steps of:

   representing the matrix $\mathbf{W}$ as a product of a second diagonal matrix $\mathbf{P}$, a Toeplitz matrix $\hat{\mathbf{W}}$, and a third diagonal matrix $\mathbf{Q}$, such that the CZT is expressed as $\mathbf{X} = \mathbf{P}\,\hat{\mathbf{W}}\,\mathbf{Q}\,\mathbf{A}\,\mathbf{x}$;
   expressing an Inverse CZT, ICZT, as $\mathbf{x} = \mathbf{A^{-1}Q^{-1}\hat{W}^{-1}P^{-1}X}$, wherein $\mathbf{A^{-1}}$, $\mathbf{Q^{-1}}$, $\mathbf{\hat{W}^{-1}}$, and $\mathbf{P^{-1}}$ are inverse matrices of $\mathbf{A}$, $\mathbf{Q}$, $\hat{\mathbf{W}}$, and $\mathbf{P}$, respectively;
   computing the ICZT by performing, using the processor, the multiplications in the product $\mathbf{A^{-1}Q^{-1}\hat{W}^{-1}P^{-1}X}$ from right to left to calculate a third vector $\hat{x}$ being a time domain vector;

   wherein the matrix $\hat{W}^{-1}$ is capable of being expressed as $\hat{W}^{-1} = (1/u_0)(\mathcal{A}\,\mathcal{A}^T - \mathcal{D}^T\mathcal{D})$ in which $\mathcal{A}$ is a first lower-triangular Toeplitz matrix, $\mathcal{A}^T$ is a first upper-triangular Toeplitz matrix that is equal to the transpose of $A$, D is a second upper-triangular Toeplitz matrix, $\mathcal{D}^T$ is a second lower-triangular Toeplitz matrix that is equal to the transpose of $\mathbf{D}$, and $u_0$ is equal to $u_0 = \dfrac{W^{\frac{n(n-1)}{2}}}{\prod_{s=1}^{n-1}(W^s-1)}$, wherein n is based on at least one of $M$ or $N$;

   wherein none of the matrices $\mathbf{A^{-1}}$, $\mathbf{Q^{-1}}$, $\mathcal{A}$, $\mathcal{A}^T$, $\mathcal{D}^T$, $\mathcal{D}$, and $\mathbf{P^{-1}}$ are fully stored in the memory device during performance of the method.

2. The method of claim 1, wherein each element of the first vector $\mathbf{x}$ is substantially equal to a corresponding element of the third vector $\hat{x}$.

3. The method of claim 1, wherein at least one element of the first vector $\mathbf{x}$ is not equal to a corresponding element of the third vector $\hat{x}$, preferably wherein, prior to computing step, the method further comprises a step of performing an operation on the second vector $\mathbf{X}$ that modifies at least one of its elements, preferably wherein the operation is a filtering operation.

4. The method of claim 1, wherein the method has a computational complexity of less than or equal to $O(n^2)$, wherein $n = \max(M, N)$, preferably wherein the computational complexity is $O(n \log n)$.

5. The method of claim 1, wherein a generating vector for each of the four matrices $\mathcal{A}$, $\mathcal{A}^T$, $\mathcal{D}^T$, and $\mathcal{D}$ is capable of being derived from a vector $\mathbf{u} = (u_0, u_1, ..., u_{n-1})$ given by:

$$u_k = (-1)^k \frac{W^{\frac{2k^2-(2n-1)k+n(n-1)}{2}}}{\prod_{s=1}^{n-k-1}(W^s-1)\prod_{s=1}^{k}(W'^s-1)}, \text{ wherein } k = 0, 1, ..., n-1.$$

6. The method of claim 1, wherein, during the step of computing the product of $\hat{W}^{-1} = (1/u_0)(\mathcal{A}\,\mathcal{A}^T - \mathcal{D}^T\mathcal{D})$ with a vector, the multiplications are performed from right to left such that no matrix is multiplied by another matrix.

7. The method of claim 6, wherein multiplication of at least one of the Toeplitz matrices $\mathcal{A}$, $\mathcal{A}^T$, $\mathcal{D}^T$, or $\mathcal{D}$ by a vector

further comprises the steps of:

embedding the Toeplitz matrix into a circulant matrix, wherein the circulant matrix is represented by its generating vector, and wherein the dimensions of the circulant matrix are based on at least one of $M$ or $N$; and
padding the vector with zeros prior to multiplication to produce a padded vector having the same length as the number of columns of the circulant matrix; and
computing a product vector by multiplying the circulant matrix with the padded vector; and
extracting a result vector comprising elements of the product vector corresponding to the rows of the circulant matrix in which the Toeplitz matrix is embedded;

preferably wherein the circulant matrix is a square matrix and wherein the number of rows of the circulant matrix is a power of two.

8. The method of claim 6, wherein multiplication of at least one of the Toeplitz matrices $\mathcal{A}$, $\mathcal{A}^T$, $\mathcal{D}^T$, or $\mathcal{D}$ by a vector comprises performing a Pustylnikov decomposition of the matrix prior to multiplication with the vector.

9. The method of claim 6, wherein the multiplication of at least one of the Toeplitz matrices $\mathcal{A}$, $\mathcal{A}^T$, $\mathcal{D}^T$, or $\mathcal{D}$ by a vector further comprises the steps of:

embedding the Toeplitz matrix into an expanded Toeplitz matrix having dimensions based on at least one of $M$ or $N$, by padding its generating vector with zeros;
padding the vector by which the Toeplitz matrix is multiplied with zeros to produce a padded vector having the same length as the number of columns in the expanded Toeplitz matrix;
expressing the expanded Toeplitz matrix as a sum of a circulant matrix and a skew-circulant matrix using Pustylnikov decomposition;
multiplying the circulant matrix by the padded vector, multiplying the skew-circulant matrix by the padded vector, and adding the two resulting vectors to produce a padded results vector;
extracting a results vector from the padded results vector by retaining the elements of the padded results vector that correspond to the rows of the expanded Toeplitz matrix into which the Toeplitz matrix is embedded;

preferably wherein the number of rows and the number of columns in the expanded Toeplitz matrix is a power of two.

10. The method of claim 1, wherein no more than O(n) memory of the memory device is required to perform the method and wherein n = max($M$, $N$); or

wherein $M$ equals $N$; or
wherein $M$ does not equal $N$.

11. The method of claim 1, wherein the first vector **x** is derived from an audio signal, preferably wherein the audio signal comprises a speech signal or wherein the audio signal comprises at least one of a sonar signal or an ultrasound signal.

12. The method of claim 1, wherein the first vector x is derived from an image signal, preferably wherein the image signal comprises at least one of a computed tomography (CT) signal, a positron emission tomography (PET) signal, or a magnetic resonance imaging (MRI) signal.

13. The method of claim 1, wherein the first vector **x** is derived from a signal received by a radar-based sensor; and/or

Wherein the first vector **x** is used to generate a signal that is sent to a radar-based sensor; and/or
wherein the second vector **X** is not computed from a specific first vector **x** using the CZT with the same parameters $A$ and $W$.

**Patentansprüche**

1. Ein Verfahren zur Verarbeitung von Audio- oder Bildsignalen unter Verwendung eines Rechensystems, das einen Prozessor und eine Speichervorrichtung umfasst, wobei der Prozessor einen Algorithmus zur Invertierung einer Chirp-Z-Transformation (CZT) ausführt, wobei die CZT Parameter $A$ und $W$ aufweist, die eine logarithmische Spiralkontur in der komplexen Ebene durch die Formel $A\,W^{-k}$ für $k = 0, 1, 2, ..., M - 1$, wobei die CZT als $\mathbf{X} = \boldsymbol{W}\,\mathbf{A}\,\mathbf{x}$ ausgedrückt werden kann, wobei $\boldsymbol{W}$ eine Vandermonde-Matrix mit den Dimensionen $M$-mal-N ist, die durch den Parameter $W$ und seine Potenzen definiert ist, $\mathbf{A}$ eine erste Diagonalmatrix ist, die durch den Parameter $A$ und seine Potenzen definiert ist, $\mathbf{x}$ ein erster Vektor ist, der ein Zeitbereichsvektor ist, der aus einem Audio- oder Bildsignal abgeleitet ist, und $\mathbf{X}$ ein zweiter Vektor ist, der ein Frequenzbereichsvektor ist, der aus dem ersten Vektor $\mathbf{x}$ unter Verwendung der CZT berechnet wird, so dass das k-te Element von $\mathbf{X}$ durch $X_k = \sum_{j=0}^{N-1} x_j \,(A\,W^{-k})^{-j}$, für $k = 0, 1, 2, ..., M - 1$ gegeben ist, wobei $A$ und $W$ komplexe Zahlen ungleich Null sind, wobei das Verfahren die folgenden Schritte umfasst:

Darstellen der Matrix $W$ als Produkt einer zweiten Diagonalmatrix $\mathbf{P}$, einer Toeplitz-Matrix $\hat{\mathbf{W}}$ und einer dritten Diagonalmatrix $\mathbf{Q}$, sodass die CZT als $\mathbf{X} = \mathbf{P}\,\hat{\mathbf{W}}\,\mathbf{Q}\,\mathbf{A}\,\mathbf{x}$ ausgedrückt wird;

Ausdrücken einer inversen CZT, ICZT, als $\mathbf{x} = \mathbf{A^{-1}}\,\mathbf{Q^{-1}}\,\hat{\mathbf{W}}^{-1}\,\mathbf{P^{-1}}\,\mathbf{X}$, wobei $\mathbf{A^{-1}}$, $\mathbf{Q^{-1}}$, $\hat{\mathbf{W}}^{-1}$ und $\mathbf{P^{-1}}$ jeweils inverse Matrizen von $\mathbf{A}$, $\mathbf{Q}$, $\hat{\mathbf{W}}$ und $\mathbf{P}$ sind;

Berechnen der ICZT durch Ausführen, unter Verwendung des Prozessors, der Multiplikationen im Produkt $\mathbf{A^{-1}}\,\mathbf{Q^{-1}}\,\hat{\mathbf{W}}^{-1}\,\mathbf{P^{-1}}\,\mathbf{X}$ von rechts nach links, um einen dritten Vektor $\hat{\mathbf{x}}$, der ein Zeitbereichsvektor ist, zu berechnen;

wobei die Matrix $\hat{\mathbf{W}}^{-1}$ als $\hat{\mathbf{W}}^{-1} = (1/u_0)\,(\mathcal{A}\,\mathcal{A}^{T} - \mathcal{D}^{T}\,\mathcal{D})$ ausgedrückt werden kann, wobei $\mathcal{A}$ eine erste untere Dreiecks-Toeplitz-Matrix ist, $\mathcal{A}^{T}$ eine erste obere Dreiecks-Toeplitz-Matrix ist, die gleich der Transponierten von $\mathcal{A}$ ist, $\mathcal{D}$ eine zweite obere Dreiecks-Toeplitz-Matrix ist, $\mathcal{D}^{T}$ eine zweite untere Dreiecks-Toeplitz-Matrix ist, die gleich der Transponierten von $\mathcal{D}$ ist, und $u_0$ ist gleich $u_0 = \dfrac{W^{\frac{n(n-1)}{2}}}{\prod_{s=1}^{n-1}(W^s - 1)}$, wobei $n$ auf mindestens einem von $M$ oder $N$ basiert;

wobei keine der Matrizen $\mathbf{A^{-1}}$, $\mathbf{Q^{-1}}$, $\mathcal{A}$, $\mathcal{A}^{T}$, $\mathcal{D}^{T}$, $\mathcal{D}$ und $\mathbf{P^{-1}}$ während der Durchführung des Verfahrens vollständig in der Speichervorrichtung gespeichert sind.

2. Verfahren nach Anspruch 1, wobei jedes Element des ersten Vektors $\mathbf{x}$ im Wesentlichen gleich einem entsprechenden Element des dritten Vektors $\hat{\mathbf{x}}$ ist.

3. Verfahren nach Anspruch 1, wobei mindestens ein Element des ersten Vektors $\mathbf{x}$ nicht gleich einem entsprechenden Element des dritten Vektors $\hat{\mathbf{x}}$ ist, wobei vorzugsweise vor dem Berechnungsschritt das Verfahren ferner einen Schritt umfasst, bei dem eine Operation an dem zweiten Vektor $\mathbf{X}$ durchgeführt wird, die mindestens eines seiner Elemente modifiziert, wobei vorzugsweise die Operation eine Filteroperation ist.

4. Verfahren nach Anspruch 1, wobei das Verfahren eine Rechenkomplexität von weniger als oder gleich $O(n^2)$ aufweist, wobei $n = \max(M, N)$ ist, vorzugsweise wobei die Rechenkomplexität $O(n \log n)$ ist.

5. Verfahren nach Anspruch 1, wobei ein Erzeugungsvektor für jede der vier Matrizen $\mathcal{A}$, $\mathcal{A}^{T}$, $\mathcal{D}^{T}$ und $\mathcal{D}$ von einem Vektor $u = (u_0, u_1, ..., u_{n-1})$ abgeleitet werden kann, der gegeben ist durch:

$$u_k = (-1)^k \frac{W^{\frac{2k^2 - (2n-1)k + n(n-1)}{2}}}{\prod_{s=1}^{n-k-1}(W^s - 1)\prod_{s=1}^{k}(W^s - 1)}\text{, wobei } k = 0, 1, ..., n-1.$$

6. Das Verfahren nach Anspruch 1, wobei während des Schritts des Berechnens des Produkts von $\hat{\mathbf{W}}^{-1} = (1/u_0)\,(\mathcal{A}\,\mathcal{A}^{T} - \mathcal{D}^{T}\,\mathcal{D})$ mit einem Vektor die Multiplikationen von rechts nach links durchgeführt werden, so dass keine Matrix mit einer anderen Matrix multipliziert wird.

7. Verfahren nach Anspruch 6, wobei die Multiplikation mindestens einer der Toeplitz-Matrizen $\mathcal{A}$, $\mathcal{A}^{T}$, $\mathcal{D}^{T}$ oder $\mathcal{D}$ mit einem Vektor ferner die folgenden Schritte umfasst:

Einbetten der Toeplitz-Matrix in eine zirkulante Matrix, wobei die zirkulante Matrix durch ihren Erzeugungsvektor dargestellt wird und wobei die Dimensionen der zirkulanten Matrix auf mindestens einem von $M$ oder $N$ basieren; und

Auffüllen des Vektors mit Nullen vor der Multiplikation, um einen aufgefüllten Vektor zu erzeugen, der dieselbe Länge wie die Anzahl der Spalten der zirkulanten Matrix hat; und

Berechnen eines Produktvektors durch Multiplikation der zirkulanten Matrix mit dem aufgefüllten Vektor; und Extrahieren eines Ergebnisvektors, der Elemente des Produktvektors umfasst, die den Zeilen der zirkulanten Matrix entsprechen, in die die Toeplitz-Matrix eingebettet ist;

vorzugsweise wobei die zirkulante Matrix eine quadratische Matrix ist und wobei die Anzahl der Zeilen der zirkulanten Matrix eine Potenz von zwei ist.

8. Das Verfahren nach Anspruch 6, wobei die Multiplikation mindestens einer der Toeplitz-Matrizen $\mathcal{A}$, $\mathcal{A}^T$, $\mathcal{D}^T$ oder $\mathcal{D}$ mit einem Vektor das Durchführen einer Pustylnikov-Zerlegung der Matrix vor der Multiplikation mit dem Vektor umfasst.

9. Verfahren nach Anspruch 6, wobei die Multiplikation mindestens einer der Toeplitz-Matrizen $\mathcal{A}$, $\mathcal{A}^T$, $\mathcal{D}^T$ oder $\mathcal{D}$ mit einem Vektor ferner die folgenden Schritte umfasst:

Einbetten der Toeplitz-Matrix in eine erweiterte Toeplitz-Matrix mit Dimensionen basierend auf mindestens einem von M oder $N$, indem ihr Erzeugungsvektor mit Nullen aufgefüllt wird;

Auffüllen des Vektors, mit dem die Toeplitz-Matrix multipliziert wird, mit Nullen, um einen aufgefüllten Vektor zu erzeugen, der dieselbe Länge wie die Anzahl der Spalten in der erweiterten Toeplitz-Matrix hat;

Ausdrücken der erweiterten Toeplitz-Matrix als Summe einer zirkulanten Matrix und einer schrägen zirkulanten Matrix unter Verwendung der Pustylnikov-Zerlegung;

Multiplizieren der zirkulanten Matrix mit dem aufgefüllten Vektor, Multiplizieren der schiefzirkulanten Matrix mit dem aufgefüllten Vektor und Addieren der beiden resultierenden Vektoren, um einen aufgefüllten Ergebnisvektor zu erzeugen;

Extrahieren eines Ergebnisvektors aus dem aufgefüllten Ergebnisvektor, indem die Elemente des aufgefüllten Ergebnisvektors beibehalten werden, die den Zeilen der erweiterten Toeplitz-Matrix entsprechen, in die die Toeplitz-Matrix eingebettet ist;

vorzugsweise wobei die Anzahl der Zeilen und die Anzahl der Spalten in der erweiterten Toeplitz-Matrix eine Potenz von zwei ist.

10. Verfahren nach Anspruch 1, wobei nicht mehr als O(n) Speicher des Speichergeräts erforderlich ist, um das Verfahren auszuführen, und wobei n = max(M, N) ist; oder

wobei $M$ gleich $N$ ist; oder
wobei $M$ nicht gleich $N$ ist.

11. Verfahren nach Anspruch 1, wobei der erste Vektor **x** aus einem Audiosignal abgeleitet wird, vorzugsweise wobei das Audiosignal ein Sprachsignal umfasst oder wobei das Audiosignal mindestens eines von einem Sonarsignal oder einem Ultraschallsignal umfasst.

12. Verfahren nach Anspruch 1, wobei der erste Vektor **x** aus einem Bildsignal abgeleitet wird, vorzugsweise wobei das Bildsignal mindestens eines von einem Computertomographie-Signal (CT-Signal), einem Positronen-Emissions-Tomographie-Signal (PET-Signal) oder einem Magnetresonanz-Bildgebungssignal (MRI-Signal) umfasst.

13. Verfahren nach Anspruch 1, wobei der erste Vektor **x** aus einem von einem radarbasierten Sensor empfangenen Signal abgeleitet wird; und/oder wobei der erste Vektor **x** verwendet wird, um ein Signal zu erzeugen, das an einen radarbasierten Sensor gesendet wird; und/oder

wobei der zweite Vektor **X** nicht aus einem bestimmten ersten Vektor **x** unter Verwendung des CZT mit denselben Parametern $A$ und $W$ berechnet wird.

**Revendications**

1. Procédé de traitement de signaux audio ou d'images à l'aide d'un système informatique comprenant un processeur et un dispositif de mémoire, dans lequel le processeur exécute un algorithme pour inverser une transformée chirp-Z, CZT, dans lequel la CZT a des paramètres $A$ et $W$ qui définissent un contour en spirale logarithmique dans le plan complexe par la formule $A\,W^{-k}$ pour $k = 0, 1, 2, ... , M$ - 1, où la CZT peut être exprimé comme $\mathbf{X} = \mathbf{W}\mathbf{A}\,\mathbf{x}$, où $\mathbf{W}$ est une matrice de Vandermonde de dimensions $M$ par $N$ définie par le paramètre $W$ et ses puissances, $\mathbf{A}$ est une première matrice diagonale définie par le paramètre A et ses puissances, $\mathbf{x}$ est un premier vecteur qui est un vecteur du domaine temporel dérivé d'un signal audio ou image, et $\mathbf{X}$ est un deuxième vecteur qui est un vecteur du domaine fréquentiel calculé à partir du premier vecteur x à l'aide de la CZT de telle sorte que le k-ème élément de $\mathbf{X}$ est donné par

$$X_k = \sum_{j=0}^{N-1} x_j \; (A\,W^{-k})^{-j} \; ,$$

pour $k = 0, 1, 2, ... , M$ - 1, où $A$ et $W$ sont des nombres complexes non nuls, le procédé comprenant les étapes suivantes :

représenter la matrice $\mathbf{W}$ comme un produit d'une deuxième matrice diagonale $\mathbf{P}$, d'une matrice de Toeplitz $\hat{\mathbf{W}}$ et d'une troisième matrice diagonale $\mathbf{Q}$, de telle sorte que la CZT soit exprimée comme $\mathbf{X} = \mathbf{P}\,\hat{\mathbf{W}}\,\mathbf{Q}\,\mathbf{A}\,\mathbf{x}$ ; exprimer une CZT inverse, ICZT, comme $\mathbf{X} = \mathbf{A}^{-1}\mathbf{Q}^{-1}\,\hat{\mathbf{W}}^{-1}\,\mathbf{P}^{-1}\,\mathbf{X}$, où $\mathbf{A}^{-1}$, $\mathbf{Q}^{-1}$, $\hat{\mathbf{W}}^{-1}$ et $\mathbf{P}^{-1}$ sont respectivement les matrices inverses de $\mathbf{A}$, $\mathbf{Q}$, $\hat{\mathbf{W}}$ et $\mathbf{P}$ ;
calculer l'ICZT en effectuant, à l'aide du processeur, les multiplications dans le produit $\mathbf{A}^{-1}$, $\mathbf{Q}^{-1}$, $\hat{\mathbf{W}}^{-1}$ et $\mathbf{P}^{-1}$ de droite à gauche pour calculer un troisième vecteur $\hat{x}$ qui est un vecteur du domaine temporel ;
où la matrice $\hat{\mathbf{W}}^{-1}$ peut être exprimée comme :

$$\hat{\mathbf{W}}^{-1} = (1/u_0)\,(\mathcal{A}\,\mathcal{A}^T - \mathcal{D}^T\,\mathcal{D})$$

dans laquelle $\mathcal{A}$ est une première matrice de Toeplitz triangulaire inférieure, $\mathcal{A}^T$ est une première matrice de Toeplitz triangulaire supérieure qui est égale à la transposée de $\mathcal{A}$, $\mathcal{D}$ est une deuxième matrice de Toeplitz triangulaire supérieure, $\mathcal{D}^T$ est une deuxième matrice triangulaire inférieure de Toeplitz qui est égale à la transposée de $\mathcal{D}$, et $u_0$ est égal à :

$$u_0 = \frac{W^{\frac{n(n-1)}{2}}}{\prod_{s=1}^{n-1}(W^s - 1)}$$

où n est basé sur au moins un parmi $M$ ou N ;

où aucune des matrices $\mathbf{A}^{-1}$, $\mathbf{Q}^{-1}$, $\mathcal{A}$, $\mathcal{A}^T$, $\mathcal{D}^T$, $\mathcal{D}$ et $\mathbf{P}^{-1}$ n'est entièrement stockée dans le dispositif de mémoire pendant l'exécution du procédé.

2. Procédé selon la revendication 1, dans lequel chaque élément du premier vecteur $\mathbf{x}$ est sensiblement égal à un élément correspondant du troisième vecteur $\hat{x}$.

3. Procédé selon la revendication 1, dans lequel au moins un élément du premier vecteur $\mathbf{x}$ n'est pas égal à un élément correspondant du troisième vecteur $\hat{x}$, de préférence dans lequel, avant l'étape de calcul, le procédé comprend en outre une étape consistant à effectuer une opération sur le deuxième vecteur $\mathbf{X}$ qui modifie au moins un de ses éléments, de préférence dans lequel l'opération est une opération de filtrage.

4. Procédé selon la revendication 1, dans lequel le procédé a une complexité de calcul inférieure ou égale à O(n2), où n = max (M, N), de préférence dans lequel la complexité computationnelle est O(n log n).

**5.** Procédé selon la revendication 1, dans lequel un vecteur générateur pour chacune des quatre matrices $\mathcal{A}$, $\mathcal{A}^T$, $\mathcal{D}^T$, et $\mathcal{D}$ peut être dérivée d'un vecteur $\mathbf{u} = (u_0, u_1, ..., u_{n-1})$ donné par :

$$u_k = (-1)^k \frac{W^{\frac{2k^2-(2n-1)k+n(n-1)}{2}}}{\prod_{s=1}^{n-k-1}(W^s-1)\prod_{s=1}^{k}(W^s-1)} \quad , \text{où } k = 0,1, ..., \text{n-1}.$$

**6.** Procédé selon la revendication 1, dans lequel, pendant l'étape de calcul du produit de $\hat{\mathbf{W}}^{-1} = (1/u_0)\,(\mathcal{A}\,\mathcal{A}^T - \mathcal{D}^T\mathcal{D})$ par un vecteur, les multiplications sont effectuées de droite à gauche de manière à ce qu'aucune matrice ne soit multipliée par une autre matrice.

**7.** Procédé selon la revendication 6, dans lequel la multiplication d'au moins une des matrices de Toeplitz $\mathcal{A}$, $\mathcal{A}^T$, $\mathcal{D}^T$, ou $\mathcal{D}$ par un vecteur comprend en outre les étapes suivantes :

intégrer la matrice de Toeplitz dans une matrice circulante, dans laquelle la matrice circulante est représentée par son vecteur générateur, et dans laquelle les dimensions de la matrice circulante sont basées sur au moins un décalage $M$ ou $N$ ; et
compléter le vecteur avec des zéros avant la multiplication afin de produire un vecteur complété ayant la même longueur que le nombre de colonnes de la matrice circulante ; et
calculer un vecteur produit en multipliant la matrice circulante par le vecteur complété ; et
extraire un vecteur résultat comprenant des éléments du vecteur produit correspondant aux lignes de la matrice circulante dans laquelle la matrice de Toeplitz est intégrée ;

de préférence, dans lequel la matrice circulante est une matrice carrée et dans lequel le nombre de lignes de la matrice circulante est une puissance de deux.

**8.** Procédé selon la revendication 6, dans lequel la multiplication d'au moins une des matrices de Toeplitz $\mathcal{A}$, $\mathcal{A}^T$, $\mathcal{D}^T$, ou $\mathcal{D}$ par un vecteur comprend la réalisation d'une décomposition de Pustylnikov de la matrice avant la multiplication par le vecteur.

**9.** Procédé selon la revendication 6, dans lequel la multiplication d'au moins une des matrices de Toeplitz $\mathcal{A}$, $\mathcal{A}^T$, $\mathcal{D}^T$, ou $\mathcal{D}$ par un vecteur comprend en outre les étapes suivantes :

intégrer la matrice de Toeplitz dans une matrice de Toeplitz étendue ayant des dimensions basées sur au moins un parmi $M$ ou $N$, en complétant son vecteur générateur avec des zéros ;
compléter le vecteur par lequel la matrice de Toeplitz est multipliée par des zéros afin de produire un vecteur compléter ayant la même longueur que le nombre de colonnes dans la matrice de Toeplitz étendue ;
exprimer la matrice de Toeplitz étendue comme une somme d'une matrice circulante et d'une matrice circulante asymétrique à l'aide de la décomposition de Pustylnikov ;
multiplier la matrice circulante par le vecteur complété, multiplier la matrice circulante asymétrique par le vecteur complété, et additionner les deux vecteurs résultants pour produire un vecteur de résultats complété ;
extraire un vecteur de résultats du vecteur de résultats complété en conservant les éléments du vecteur de résultats complété qui correspondent aux lignes de la matrice de Toeplitz étendue dans laquelle la matrice de Toeplitz est intégrée ;
de préférence, le nombre de lignes et le nombre de colonnes dans la matrice de Toeplitz étendue étant une puissance de deux.

**10.** Procédé selon la revendication 1, dans lequel pas plus de O(n) de mémoire du dispositif de mémoire est nécessaire pour exécuter le procédé et dans lequel n = max(M, N) ; ou bien,

dans lequel $M$ est égal à $N$ ; ou bien,

dans lequel *M* n'égale pas *N*.

11. Procédé selon la revendication 1, dans lequel le premier vecteur **x** est dérivé d'un signal audio, de préférence dans lequel le signal audio comprend un signal vocal ou dans lequel le signal audio comprend au moins un signal sonar ou un signal ultrasonore.

12. Procédé selon la revendication 1, dans lequel le premier vecteur **x** est dérivé d'un signal d'image, de préférence dans lequel le signal d'image comprend au moins un signal de tomographie par ordinateur (CT), un signal de tomographie par émission de positons (PET) ou un signal d'imagerie par résonance magnétique (IRM).

13. Procédé selon la revendication 1, dans lequel le premier vecteur **x** est dérivé d'un signal reçu par un capteur radar ; et/ou,

dans lequel le premier vecteur **x** est utilisé pour générer un signal qui est envoyé à un capteur radar ; et/ou, dans lequel le deuxième vecteur **X** n'est pas calculé à partir d'un premier vecteur **x** spécifique à l'aide du CZT avec les mêmes paramètres *A* et *W*.

FIG. 1A

FIG. 1B

| $M$ | Condition number $\kappa_2$ | Size of the Floating-Point Numbers | | | |
|---|---|---|---|---|---|
| | | 64 bits | 128 bits | 256 bits | 512 bits |
| 4 | $1.3 \times 10^0$ | $3.3 \times 10^{-16}$ | $1.8 \times 10^{-34}$ | $8.4 \times 10^{-72}$ | $1.1 \times 10^{-147}$ |
| 8 | $2.0 \times 10^0$ | $5.7 \times 10^{-16}$ | $2.9 \times 10^{-34}$ | $1.6 \times 10^{-71}$ | $2.1 \times 10^{-147}$ |
| 16 | $5.8 \times 10^0$ | $1.1 \times 10^{-15}$ | $6.1 \times 10^{-34}$ | $3.8 \times 10^{-71}$ | $3.6 \times 10^{-147}$ |
| 32 | $6.1 \times 10^1$ | $2.9 \times 10^{-15}$ | $1.6 \times 10^{-33}$ | $8.5 \times 10^{-71}$ | $1.1 \times 10^{-146}$ |
| 64 | $8.7 \times 10^3$ | $2.2 \times 10^{-14}$ | $1.5 \times 10^{-32}$ | $7.5 \times 10^{-70}$ | $8.5 \times 10^{-146}$ |
| 128 | $2.4 \times 10^8$ | $3.6 \times 10^{-12}$ | $1.9 \times 10^{-30}$ | $8.7 \times 10^{-68}$ | $1.4 \times 10^{-143}$ |
| 256 | $1.6 \times 10^{17}$ | $1.8 \times 10^{-7}$ | $1.2 \times 10^{-25}$ | $5.6 \times 10^{-63}$ | $8.9 \times 10^{-139}$ |
| 512 | $8.6 \times 10^{28}$ | $1.6 \times 10^3$ | $1.3 \times 10^{-15}$ | $4.3 \times 10^{-53}$ | $5.9 \times 10^{-129}$ |
| 1024 | $2.5 \times 10^{46}$ | $2.0 \times 10^{23}$ | $2.1 \times 10^5$ | $6.2 \times 10^{-33}$ | $9.0 \times 10^{-109}$ |
| 2048 | $1.0 \times 10^{85}$ | $6.9 \times 10^{63}$ | $6.6 \times 10^{45}$ | $3.3 \times 10^8$ | $3.3 \times 10^{-68}$ |

FIG. 2

| Matrix Type | Matrix Shape | Generating Vectors |
|---|---|---|
| Diagonal | $\begin{bmatrix} a & 0 & 0 \\ 0 & b & 0 \\ 0 & 0 & c \end{bmatrix}$ | $\mathbf{v} = (a, b, c)$ |
| Toeplitz | $\begin{bmatrix} a & b & c \\ d & a & b \\ e & d & a \end{bmatrix}$ | $\mathbf{r} = (a, b, c)$ <br><br> $\mathbf{c} = (a, d, e)$ |
| Upper-Triangular Toeplitz | $\begin{bmatrix} a & b & c \\ 0 & a & b \\ 0 & 0 & a \end{bmatrix}$ | $\mathbf{r} = (a, b, c)$ <br><br> $\mathbf{c} = (a, 0, 0)$ |
| Lower-Triangular Toeplitz | $\begin{bmatrix} a & 0 & 0 \\ d & a & 0 \\ e & d & a \end{bmatrix}$ | $\mathbf{r} = (a, 0, 0)$ <br><br> $\mathbf{c} = (a, d, e)$ |
| Symmetric Toeplitz | $\begin{bmatrix} a & b & c \\ b & a & b \\ c & b & a \end{bmatrix}$ | $\mathbf{r} = (a, b, c)$ <br><br> $\mathbf{c} = (a, b, c)$ |
| Circulant | $\begin{bmatrix} a & c & b \\ b & a & c \\ c & b & a \end{bmatrix}$ | $\mathbf{r} = (a, c, b)$ <br><br> $\mathbf{c} = (a, b, c)$ |
| Skew-Circulant | $\begin{bmatrix} a & -c & -b \\ b & a & -c \\ c & b & a \end{bmatrix}$ | $\mathbf{r} = (a, -c, -b)$ <br><br> $\mathbf{c} = (a, b, c)$ |
| Vandermonde | $\begin{bmatrix} a^0 & a^1 & a^2 \\ b^0 & b^1 & b^2 \\ c^0 & c^1 & c^2 \end{bmatrix}$ | $\mathbf{v} = (a, b, c)$ |

FIG. 3

# FFT or IFFT

# CZT or ICZT

FIG. 4A

FIG. 4B

FIG. 5A

FIG. 5B

FIG. 5C

FIG. 5D

FIG. 6A                    FIG. 6B                    FIG. 6C

FIG. 7A

FIG. 7B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BLUESTEIN**. A linear filtering approach to the computation of discrete Fourier transform. *IEEE Transactions on Audio and Electroacoustics*, 1970, vol. 18 (4), 451-455
- **FRICKEY**. Using the inverse chirp-z transform for time-domain analysis of simulated radar signals. *Technical report, Idaho National Engineering Lab., Idaho Falls, ID*, 1995
- **I. GOHBERG et al.** On the inversion of finite Toeplitz matrices and their continuous analogs. *Mat. issled*, 1972, vol. 2 (1), 201-233
- **WILLIAM TRENCH**. An algorithm for inversion of finite Toeplitz matrices. *Journal of the Society for Industrial and Applied Mathematics*, 1964, vol. 12 (3), 515-522